# EUROPEAN PATENT SPECIFICATION

(11) **EP 2 945 745 B1**
(45) Date of publication and mention of the grant of the patent: **02.03.2022**
(21) Application number: 14747112.2
(22) Date of filing: 19.01.2014
(51) Int. Cl.: B01L 3/02, B01L 3/00, G01N 33/543, G01N 33/544, G01N 35/10

(54) **METHODS TO FABRICATE, MODIFY, REMOVE AND UTILIZE FLUID MEMBRANES**
VERFAHREN ZUR HERSTELLUNG, MODIFIZIERUNG, ENTFERNUNG UND VERWENDUNG VON FLUIDMEMBRANEN
PROCÉDÉS DE FABRICATION, DE MODIFICATION, D'ÉLIMINATION ET D'UTILISATION DE MEMBRANES POUR FLUIDE

(30) Priority: 19.01.2013 US 201361754554 P
(43) Date of publication of application: 25.11.2015
(73) Proprietor: Fluicell AB, 431 37 Mölndal (SE)
(72) Inventor: AINLA, Alar, Cambridge, MA 02138 (US); GOZEN, Irep, Somerville, MA 02143 (US); JESORKA, Aldo, S-413 25 Göteborg (SE); SHAALI, Mehrnaz, S-413 20 Göteborg (SE)
(74) Representative: Noréns Patentbyrå AB
(86) International application number: PCT/IB2014/001089
(87) International publication number: WO 2014/132139

(56) References cited:
- SMITH KATHRYN ET AL: "Micropatterned fluid lipid bilayer arrays created using a continuous flow microspotter", ABSTRACTS OF PAPERS AMERICAN CHEMICAL SOCIETY, vol. 237, March 2009 (2009-03), pages 408-COLL, XP002733838, & 237TH NATIONAL MEETING OF THE AMERICAN-CHEMICAL-SOCIETY; SALT LAKE CITY, UT, USA; MARCH 22 -26, 2009 ISSN: 0065-7727
- ROBERT D LOVCHIK ET AL: "Multilayered microfluidic probe heads", JOURNAL OF MICROMECHANICS & MICROENGINEERING, INSTITUTE OF PHYSICS PUBLISHING, BRISTOL, GB, vol. 19, no. 11, 1 November 2009 (2009-11-01), page 115006, XP020168801, ISSN: 0960-1317
- AINLA A ET AL: "Hydrodynamic flow confinement technology in microfluidic perfusion devices", MICROMACHINES 2012 MDPI AG CHE, vol. 3, no. 2, 2012, pages 442-461, XP002733839, DOI: 10.3390/MI3020442
- KAIGALA G V ET AL: "Microfluidics in the "open Space" for performing localized chemistry on biological interfaces", ANGEWANDTE CHEMIE - INTERNATIONAL EDITION 20121105 WILEY-VCH VERLAG DEU, vol. 51, no. 45, 5 November 2012 (2012-11-05), pages 11224-11240, XP002733840, DOI: 10.1002/ANIE.201201798
- AINLA A ET AL: "A microfluidic pipette for single-cell pharmacology", ANALYTICAL CHEMISTRY 20100601 AMERICAN CHEMICAL SOCIETY USA, vol. 82, no. 11, 1 June 2010 (2010-06-01), pages 4529-4536, XP002733841, DOI: 10.1021/AC100480F
- Mohammad A. Qasaimeh ET AL: "Microfluidic probes for use in life sciences and medicine", Lab on a Chip, vol. 13, no. 1, 24 September 2012 (2012-09-24), pages 40-50, XP055586831, ISSN: 1473-0197, DOI: 10.1039/C2LC40898H

## Description

### CROSS-REFERENCE TO RELATED APPLICATIONS

This application claims the benefit of priority to U.S. Provisional Patent Application Serial No. 61/754,554, filed January 19, 2013.

### BACKGROUND OF THE INVENTION

The most important class of two-dimensional fluids are biological membranes. Biomembranes consist of lipids and are the key components of all living organisms, defining walls of cells and organelles inside them, which allows separating different chemical cellular processes from each other. In order to fulfill transport and control requirements of life, these membranes host numerous membrane proteins, which act as gateways responsible for uptake of nutrients and transmitting chemical signals from and to the surrounding, to name a few examples. Besides membrane proteins, other micro- and nano-scale objects, ranging from vesicles, bacteria and viruses to synthetic nanoparticles, are of interest under the aspect of binding or associating to biological membranes.

The Lab On A Chip journal article in Volume 13, Issue 1, Pages 40-50, 2013 entitled "Microfluidic probes for use in life sciences and medicine" by Qasaimeh Mohammad A et al, discloses a review of microfluidic probes which highlights their application in surface biopatterning, controlling the cellular microenvironments, local processing of tissue slices, and generating concentration gradients of biochemicals.

From SMITH KATHRYN ET AL: "Micropatterned fluid lipid bilayer arrays created using a continuous flow microspotter", Analytical Chemistry Vol. 80, Nr 21, November 1 2008, Pages 7980-7987 discloses a known method for fabrication of a membrane on a surface, the method comprising: providing a flow-recirculating fluidic device having channel exits in the liquid environment in proximity of the surface; and locally delivering one or more processing solutions, wherein the one or more processing sources include one or more membrane sources adapted and configured to form a membrane on the surface.

This invention provides a method in accordance with the independent claim for fabrication of a membrane on a surface.

The method includes: providing a surface interfacing two environments, wherein one of the environments is a liquid; providing a flow-recirculating fluidic device having channel exits in the liquid environment in proximity of the surface; and locally delivering one or more processing solutions. The one or more processing sources include one or more membrane sources adapated and configured to form a membrane on the surface.

The flow-recirculating fluidic device is a micro fluidic device. The channel exits can be positioned at a distance of about 10 µm to about 100 µm from the surface.

The method further includes controlling a positioning device to facilitate translation of the channel exits relative to the surface. The positioning device is adapted and configured to translate the channel exits to create a two-dimensional fluid membrane having a geometry defined by a translation path. The positioning device can be a micromanipulator. The positioning device can be a scanning stage. The positioning device can include an electronic controller adapted and configured to control speed and trajectory of translation.

The processing solution can be switched between two or more solutions. Two or more different processing solutions can be delivered simultaneously. One of the processing solutions can be selected from the group consisting of: a chemical conjugation agent addressing a functional group in the membrane, a membrane soluble dye, and a fixation agent. One of the processing solutions can be a detergent adapted and configured to remove a portion of the membrane or its components from the surface.

A gel can be formed near the surface and the gel adapted and configured to remove the membrane from the surface.

Multiple membrane sources can be used to create the membrane with variable composition. Translation and switching between membrane sources can be synchronized, thereby creating spatially heterogeneous membrane geometries. Pulse width flow modulation can be used to create membranes with continuously variable composition.

The membrane can be a surfactant multilayer, a surfactant single layer, a surfactant double layer, a double lipid bilayer, a single lipid bilayer, a lipid monolayer. The membrane can contain additional components.

One of the processing solutions can be adapted and configured to modify the membrane locally.

The membrane may be formed only when the membrane source is in direct contact with the surface. The membrane can be formed through fusion of the membrane source into an existing membrane. The membrane can be spatially heterogeneous in composition, and components of the membrane can be transported in the membrane by two-dimensional diffusion.

The processing solution can be used to remove the membrane or parts of the membrane locally from the surface. Removed membrane components can be collected for analysis.

The surface can be a solid-liquid interface. The surface can include one or more selected from the group consisting of: glass, metal, plastic, rubber, silicon, and oxides.

The surface can be a gel-liquid interface. The surface can contain a pattern. The pattern can have different chemical or physical properties than non-patterned regions of the surface. The membrane can be deposited from the membrane source selectively on the pattern. The membrane may propagate exclusively on the pattern.

Transport properties in the membrane can vary depending on location on the pattern.

The membrane source can comprise surfactant micelles.

The membrane source can comprise surfactant vesicles. The membrane source can comprises membrane extracted from biological cells. The vesicles can be small unilamellar vesicles. The vesicles can be multilamellar vesicles.

The method can further comprise applying a field or gradient along some part of the membrane. The field can be a hydrodynamic flow field sufficient to impart a shear stress on the membrane. The field can be an electric field. The field can be a magnetic field. The gradient can be a thermal gradient. The gradient can be a chemical gradient. The field or gradient can cause the membrane to propagate along the surface. The field or gradient can cause one or more of the membrane components to migrate in the membrane. Migration can cause separation of two or more of the membrane components. The field or gradient can change direction along the membrane. The direction of the field can change at a stable stagnation point for membrane attached components. The stable stagnation point can be used to accumulate or trap membrane-attached components.

The method can further include heating the membrane. Heat can be applied to a local region of the membrane. Heating can be applied globally. Heating can cause a change in membrane fluidity. Heating can cause a change in membrane adhesion strength.

The method can further comprise analyzing the membrane. The analyzing step can utilize a sensor, electrochemical sensing, microscopy, spectroscopy, and/or total internal reflection.

The surface can be a liquid-liquid interface. The surface can be a liquid-gas interface. The liquid can include water. The channel cross-sectional dimensions can be between about 10 µm and about 100 µm.

The modification can be chemical or biological and can be selected from the group consisting of: a conjugation reaction, a cleavage reaction, dissociation, formation or breakage of covalent bond or coordination bond, nucleic acid hybridization, antigen-antibody recognition, and ion pairing. One or more additional components can be selected from the group consisting of: proteins, nanoparticles, microspheres, virus particles, vesicles, cell, bacterial cells, surfactant molecules, lipid molecules and non-lipid molecules.

The method in accordance with the invention includes: introducing a fluidic device into a volume of confining liquid such that one or more outlet ports of the fluidic device are positioned below an outer surface of the confining liquid; and dispensing one or more surfactant-containing liquids from the fluidic device into the confining liquid such that the one or more surfactant-containing liquids are hydrodynamically confined between the confining liquid and a substrate below the confining liquid, thereby fabricating a membrane.

The fluidic device is a flow-recirculating fluidic device. The flow-recirculating fluidic device includes at least one inlet port.

The confining liquid can be water or an aqueous solution.

The one or more surfactant-containing liquids can include a suspension of vesicles or micelles. The vesicles can rupture upon contact with the substrate in order to form a membrane.

The surface can be a solid substrate. The substrate can include glass. The substrate can bear a pattern. The pattern can have different chemical or physical properties than non-patterned regions of the substrate. The substrate can include one or more selected from the group consisting: metal, plastic, rubber, and silicone.

The substrate can include a liquid. The substrate can be more viscous than the confining liquid. The substrate can be a gel. The substrate can be a hydrogel.

The method further includes translating the fluidic device about the substrate while dispensing the one or more surfactant-containing liquids.

The method can further include dispensing one or more processing solutions. The one or more processing solutions can comprise a chemical conjugation agent addressing a functional group in the membrane. The one or more processing solutions can comprise a membrane-soluble dye. The one or more processing solutions can comprise an antibody. The one or more processing solutions can comprise a detergent.

The processing solution can be dispensed in a sequential manner relative to the one or more surfactant-containing liquids. The processing solution can be dispensed simultaneously with the one or more surfactant-containing liquids. The surfactant-containing liquids can be dispensed using pulse-width modulation so that the membrane will have a variable composition.

The method can further comprise removing a portion of the membrane.

The membrane can be a surfactant multilayer membrane, a surfactant single layer membrane, a double lipid bilayer membrane, a single lipid bilayer membrane, or a lipid monolayer membrane.

The method can further include depositing one or more additional components into the membrane.

The one or more additional components can include one or more selected from the group consisting of: a protein, a nanoparticle, a microsphere, a virus particle, a vesicle, a cell, a bacterial cell, a surfactant molecule, a lipid molecule, and a non-lipid molecule.

The method can further include modifying a local region of the membrane. The modifying step can include one or more selected from the group consisting of: an additive reaction, a cleavage reaction, and a dissociation reaction.

### DEFINITIONS

Unless defined otherwise, all technical and scientific terms used herein have the meaning commonly understood by a person skilled in the art to which this invention belongs. The following references provide one of skill with a general definition of many of the terms used in this invention: Singleton et al., Dictionary of Microbiology and Molecular Biology (2nd ed. 1994); The Cambridge Dictionary of Science and Technology (Walker ed., 1988); The Glossary of Genetics, 5th Ed., R. Rieger et al. (eds.), Springer Verlag (1991); and Hale & Marham, The Harper Collins Dictionary of Biology (1991). As used herein, the following terms have the meanings ascribed to them below, unless specified otherwise.

In this disclosure, "comprises," "comprising," "containing" and "having" and the like can mean " includes," "including," and the like; "consisting essentially of' or "consists essentially" likewise has the meaning that which is recited so long as basic or novel characteristics of that which is recited is not changed by the presence of more than that which is recited, but excludes prior art embodiments.

The term "microfabrication" is meant to refer to a set of techniques used for fabrication of micro- or nanostructures. In certain preferred embodiments, microfabrication includes, but is not limited only to, the following techniques: photolithography, electron beam lithography, laser ablation, direct optical writing, thin film deposition (spin-coating, spray coating, chemical vapor deposition, physical vapor deposition, sputtering), thin film removal (development, dry etching, wet etching), replica molding (soft lithography), embossing, forming or bonding.

The term "microchannel" is meant to refer to a tube with nano- or microscopic cross-section. In certain preferred embodiments, a microchannel or channel has a size in the range of 0.1-200 µm. In other preferred embodiments of the present invention, microchannels are fabricated into microfluidic devices by means of microfabrication.

The term "macrochannel" is meant to refer to a tube of size larger than a microchannel (>200 µm)

The term "channel" is meant to refer to either a microchannel or a macrochannel.

The term "fluidic device" is meant to refer to a device which is used to handle and move fluids. A microfluidic device is a fluidic device. A capillary is a fluidic device.

The term "microfluidic device" is meant to refer to the microfabricated device comprising microchannels or circuits of microchannels, which are used to handle and move fluids. Preferably, microfluidic devices may include components like junctions, reservoirs, valves, pumps, mixers, filters, chromatographic columns, electrodes, waveguides, sensors, etc. Microfluidic devices can be made of polymer (e.g., PDMS, PMMA, PTFE, PE, epoxy resins, thermosetting polymers), amorphous (e.g., glass), crystalline (e.g., silicon, silicon dioxide) or metallic (e.g., Al, Cu, Au, Ag, alloys) materials. In certain preferred embodiments, a microfluidic device may contain composite materials or may be a composite material. The microfluidic pipette is a microfluidic device.

The term "membrane" is meant to refer to a molecular film with two-dimensional fluidity.

The term "object of interest" is meant to refer to the material entity to be studied, investigated, transported, positioned, separated, or otherwise influenced or modified by means of the invention.

The term "membrane attached" is meant to refer to a relationship between the membrane and the object of interest, which is characterized by a covalent or non-covalent binding or anchoring interaction.

The term "membrane embedded" is meant to refer to a relationship between the membrane and the object of interest, which is characterized by the object of interest being located within the physical boundaries of the membrane.

The term "reservoir" is meant to refer to the liquid volume that encapsulates the membrane.

The term "channel exit" is meant to refer to an open end of a channel that leads into the open volume.

The term "flow-recirculating fluidic device" is meant to refer to a fluidic device that features outflow from the device and aspiration back into the device, such that fluid leaving the device is fully or partially returned into the device. An example of a flow-recirculating device includes two closely-spaced capillaries.

The term "flow-recirculating microfluidic device" is meant to refer to a microfluidic device that features outflow from the device and aspiration back into device, such that fluid leaving the device is fully or partially returned into the device.

The term "mobility" is meant to refer to a parameter of the object relating its velocity to applied force.

The term "processing solution" is meant to refer to a solution which is delivered by the flow-recirculation device to the surface. Examples of functions of processing solution are membrane fabrication, removal, and functionalization.

The term "membrane source" is meant to refer to the processing solution used to fabricate the membrane.

### DESCRIPTION OF THE DRAWINGS

Artificially created lipid membranes are versatile structures for mimicking biomembranes. Lipid membranes can be formed on solid supports, leading to enhanced stability of the molecular film. This enables functional studies of membrane properties, membrane-associated molecules and membrane proteins, and aids the development of applications such as biosensing, 2D chemical reactions and catalysis.

Aspects of this disclosure describes a method to fabricate, modify, remove and utilize a two-dimensional fluid membrane (later referred to as "membrane") on a surface. The key aspect of the method is the localized assembly of a mesoscale membrane from precursors on a surface and its subsequent manipulation, using an open volume microfluidic device for lipid delivery. This membrane assembly and manipulation method is especially favorable for the convenient and reproducible preparation of molecular films of desired composition and size on a solid support. Compared to other supported membrane preparation methods, this method is more versatile and reproducible.

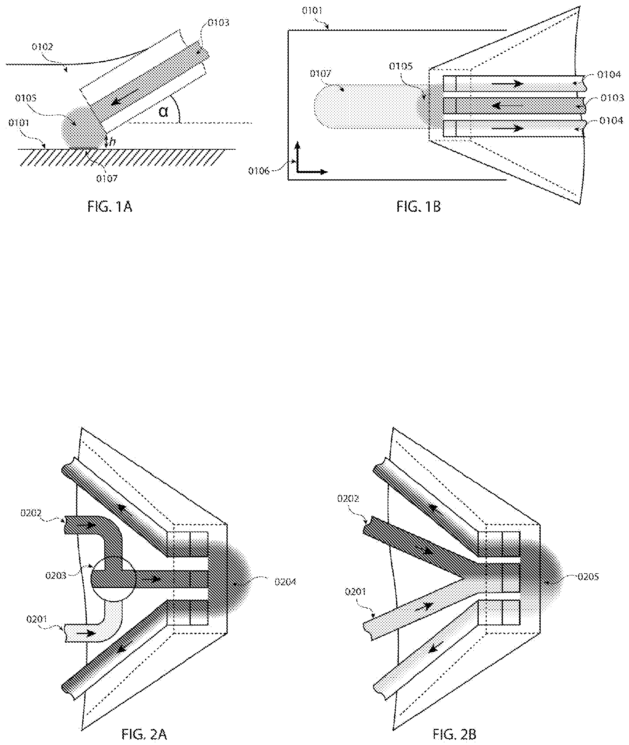

FIG. 1 describes an exemplary embodiment of the fabrication of a 2D fluidic film by means of a flow-recirculating fluidic device (A: side view, B: top view), comprising a surface 0101, covered by a liquid 0102. The device comprises three channels 0103, 0104 capable of producing a hydrodynamically confined flow ("HCF") 0105 near the surface, while the channels can be translated 0106 relative to the surface. A processing solution, delivered though the channels and confined hydrodynamically, contains membrane precursor ("membrane source"), which when brought into contact with the surface can form a two-dimensional fluid membrane ("membrane") 0107.
FIG. 2A shows exemplary multiplexing 0203 of two processing solutions (0201, 0202) into the hydrodynamically confined flow 0204 sequentially. FIG. 2B shows an embodiment in which the flow-recirculating fluidic device allows two (0201, 0202) or more processing solutions to be applied in the hydrodynamically confined flow simultaneously (0205) through one or more channels.
FIG. 3A illustrates an exemplary embodiment in which two or more membrane sources are applied sequentially to fabricate a series of compositionally different membranes (0301, 0302), when brought into contact with the surface (0303). Each spot is fabricated from one individual membrane source.
FIG. 3B illustrates an exemplary embodiment in which multiplexing of different membrane sources is used to fabricate membranes of variable composition. Pulse width modulation (0307) is used for variable membrane composition in each individual spot (0306).
FIG. 3C illustrates an exemplary embodiment in which coupling of multiplexing of membrane sources to translation (0309) of the surface relative to the channels is used to fabricate a spatially heterogeneous membrane geometry (0308).
FIG. 4 illustrates an exemplary embodiment in which one or more of the processing solutions (0402) can be used to remove (0405) the membrane locally (0403). FIG. 4A shows an exemplary membrane geometry before removal. FIG. 4B shows two new, disconnected membrane geometries after removal.
FIG. 5 illustrates an exemplary embodiment in which a hydrodynamically confined processing solution (0502) modifies a membrane locally (0505). FIG. 5A shows an exemplary membrane geometry before local modification. FIG. 5B shows the same membrane geometry after local modification.
FIG. 6 illustrates an exemplary embodiment in which a fabricated membrane is either immobile on the surface (FIG. 6A) or grows laterally by membrane spreading (FIG. 6B).

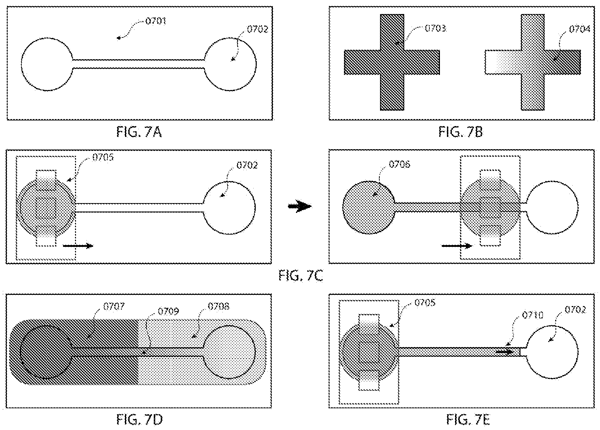

FIG. 7 illustrates an exemplary embodiment in which a surface (0701) is covered with a pattern (0702) (FIG. 7A). FIG. 7A shows an exemplary patterned surface with different properties in different patterns, wherein the surface has either the same properties over the entire pattern (0703) or has contiously variable properties (0704). In one embodiment (FIG. 7C) the membrane can be deposited from the membrane source (0705) selectively (0706) onto the pattern (0702). In one exemplary embodiment (FIG. 7D), some membrane properties (e.g., diffusivity) are different inside (0709) and outside (0708, 0709) the pattern. In one exemplary embodiment (FIG. 7E), the membrane can selectively propagate (0710) on the pattern.

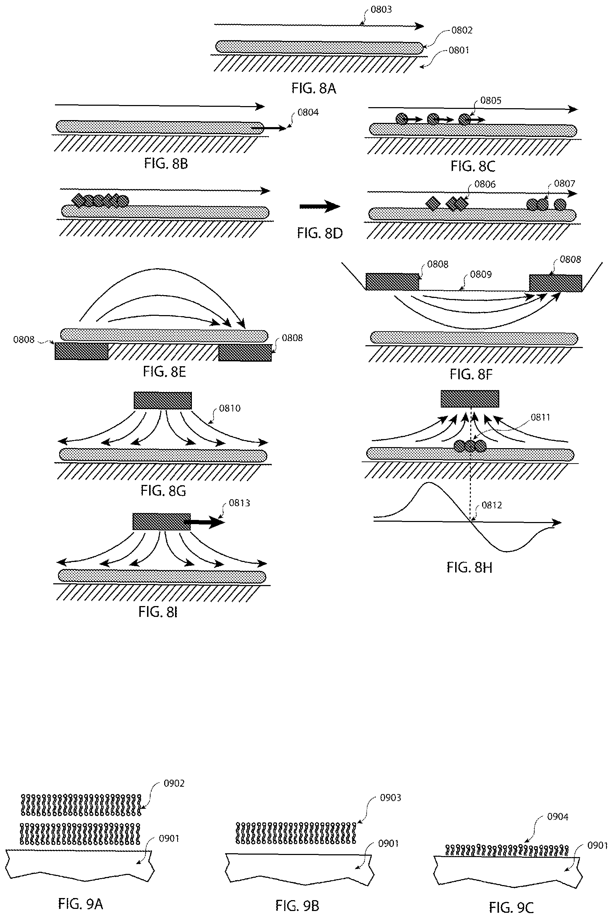

FIG. 8 illustrates an exemplary embodiment in which an field or gradient (0803) is applied along some parts of the membrane (0802) on the surface (0801) (FIG. 8A), the field or gradient causes membrane propagation (0804) (FIG. 8B), propagation of membrane-attached molecules or particles (0805) (FIG. 8C), spatial separation of molecules or particles (0806, 0807) (FIG. 8D). The source of the field (0808) can be located in or on the surface (FIG. 8E), or above or below the surface (Fig 8F), and can be located in an external device (0809), e.g., the hydrodynamically confined fluidic device. The field or gradient can be homogenous or non-homogenous (0810) (FIG. 8G). In one embodiment, the field or gradient changes polarity or direction. The point of polarity or direction change (0812) can be a stable stagnation point for membrane components or membrane attached components (0811), which are migrating in the field or gradient (FIG. 8H). The stagnation point can be moved across the surface (0813) (FIG. 8I), and used for separation, or concentration of membrane components or membrane attached components.
FIG. 9 illustrates the examples of types of membranes which can be fabricated, multiple layers (0902) (FIG. 9A), bilayers (0903) (FIG. 9B), or monolayers (0904) (FIG. 9C).
FIG. 10 shows examples of membrane fabrication mechanisms. Examplary embodiments are rupture (1003) of vesicles (1002), which form a membrane (1004) on the surface (1001) (FIG. 10A), and fusion of vesicles (1006) into an existing membrane (1005) on the surface (1001) (FIG. 10B).
FIG. 11 illustrates the utilization of a flow-recirculating microfluidic device (1101) for the fabrication of a membrane (1104) on a surface (1102). The device comprises inflow (1106) and outflow (1105) channels, which generate a flow recirculation volume (1103). The inflow is selected through a valveless switching chamber (1107), comprising a number of supply (1108) and vacuum (1110) channels. FIG. 11A is a schematic top down view, FIG. 11B a perspective view, where distance to the surface *h* and device positioning angle α are marked.
FIGS. 12A-B show fluorescence micrographs of a fabricated nonspreading lipid membrane patch (1202) immediately after deposition (A) and after three minutes (B). The channel positions are marked by white rectangles (1201) in (A), and the initial patch perimeter (t=0 min, 1203) by a white circle in (B). FIG. 12C shows the development of the fluorescence intensity of the membrane attached label over time. The inset shows the uniformity of the membrane spot along a surface coordinate.
FIGS. 12D-E show fluorescence micrographs of a fabricated spreading lipid membrane patch (1204) immediately after deposition (D) and after eight minutes (1204) (E). The channel positions are marked by white rectangles (1201) in (D), and the initial patch perimeter (t=0 min, 1203) by a white circle in (E). FIG. 12F shows the radius increase of the patch over time.
FIGS. 12G-H show fabrication of a series of membrane patches (1205) of systematically changing composition, achieved by applying pulse width modulation flow switching between two processing solutions containing different membrane sources.

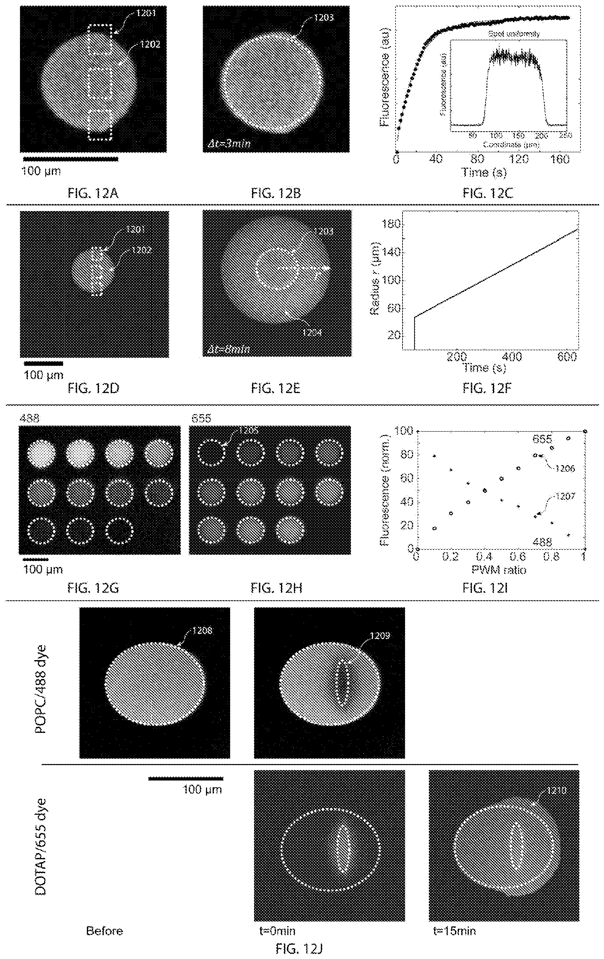

FIG. 12G shows the fluorescence micrographs of the membrane component originating from source 1, and FIG. 12H shows the fluorescence micrographs of the membrane component originating from source 2. FIG. 12I shows the quantification of the fluorescence with respect to the PWM ratio of the two components (1206, 1207).
FIG. 12J shows the fusion of a continuously applied second membrane source (1209) with an already fabricated membrane (1208). Both membrane and source were supplied by a flow-recirculating microfluidic device. The prefabricated membrane was stained with one fluorescent label, and the second membrane source with another. Both fluorescence channels are depicted. The original membrane patch grows due to incorporation of the membrane material from the second source (1210).

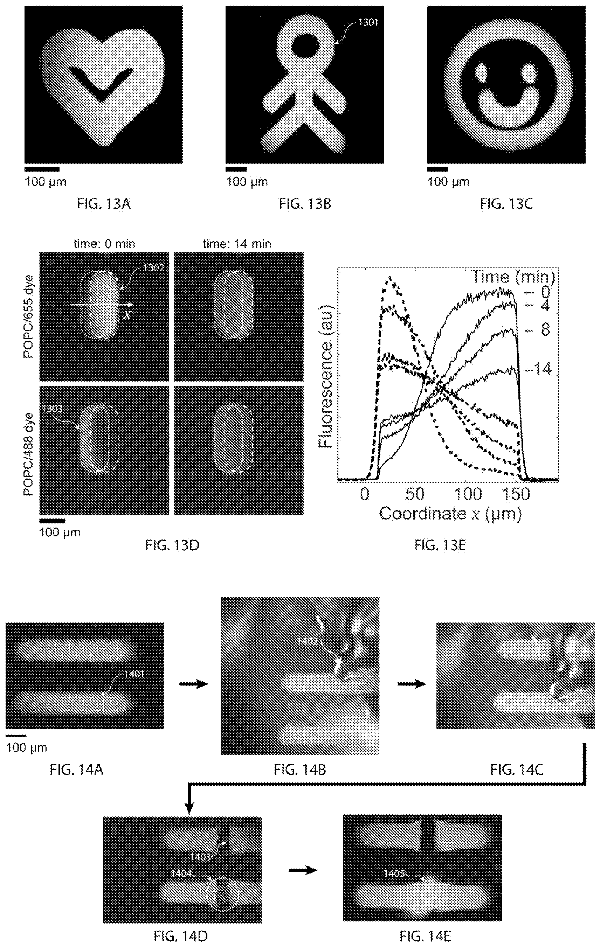

FIGS. 13A-C show fluorescence micrographs of exemplary membrane geometries, fabricated by translation of the flow-recirculating microfluidic device relative to the surface during fabrication.
FIG. 13D shows the fabrication of two partially overlaid membranes (1302 and 1303) immediately after fabrication, and at t = 22 min. Each membrane is stained with a different fluorescent label. Both membranes mix by diffusion. FIG. 13E shows the fluorescence intensity development over time for both dyes along a horizontal surface coordinate. Solid and dashed lines represent each of the two fluorescent labels, respectively.
FIG. 14 shows micrographs of localized membrane removal from prefabricated membrane lanes (1401), using a processing liquid containing a detergent (1402). The formed gap (1403) on the lower lane is repaired by fabricating membrane from another membrane source (1404). Diffusion across the repaired gap confirms fluidic connectivity (1405).

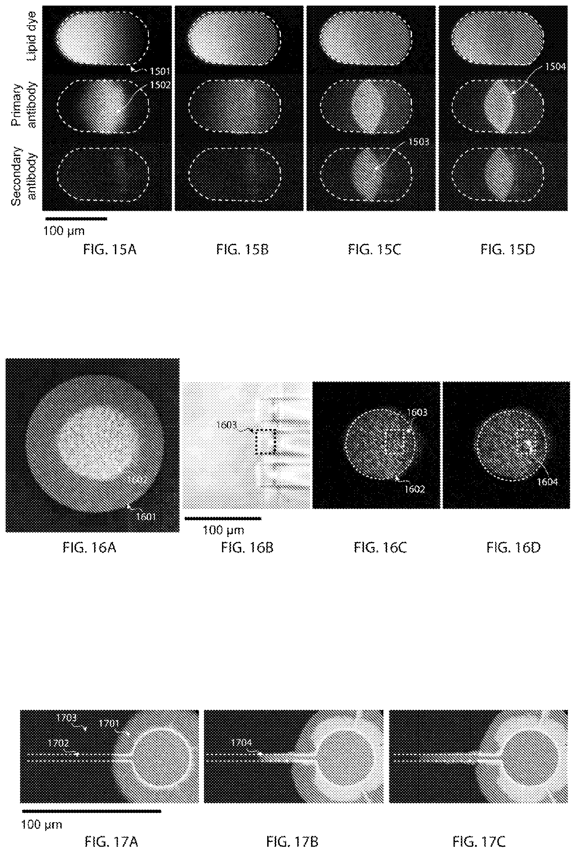

FIG. 15 shows fluorescence micrographs of the stepwise functionalization of a fabricated membrane (1501). A fluorescently-labeled primary antibody (1502) against a membrane constituent (biotin) is applied first, and a fluorescently-labeled secondary antibody (1503) against the first antibody is applied second, both from different processing solutions from the flow-recirculating microfluidic device. The top row shows a time series of the fluorescence of a membrane-attached fluorescent dye, the middle row a time series of the fluorescence of the primary antibody, and the bottom row a time series of the fluorescence of the secondary antibody.
FIG. 16 shows micrographs of a hydrodynamic trapping experiment. A spreading membrane (1601) is fabricated first, and a non-spreading membrane (1602) second (FIG. 16A). Outflow from the center channel of the flow-recirculating microfluidic device (1603) is reversed (FIG. 16B), leading to accumulation of membrane material (1604) from the non-spreading material in the stagnation point of the flow field.
FIG. 17 shows fluorescence micrographs of directed migration (1704) of a spreading membrane (1701) inside specific patterns (1702) on a patterned surface (1703).

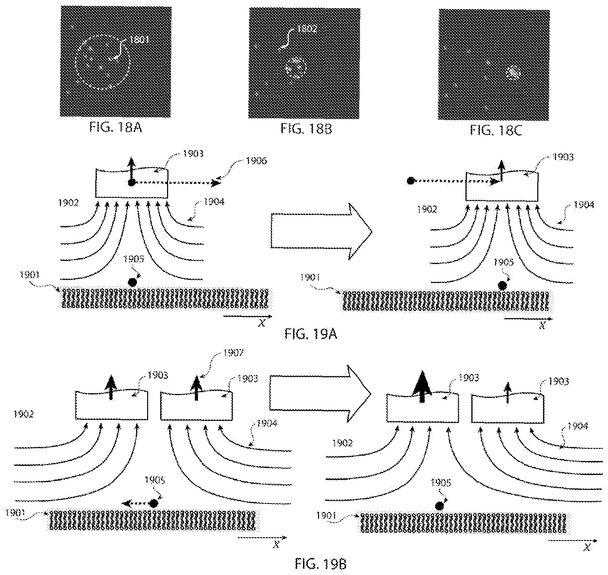

FIG. 18 shows a time series of three fluorescence micrographs of trapping and concentration control of fluorescent nanoparticles 1801 at different trapping conditions defined by the inflow rate of the flow-recirculating microfluidic device. Immobile particles (1802) are unaffected by the flow.
FIG. 19 shows two exemplary modes of transport of a membrane-attached object 1905 by moving the stagnation point. The object is trapped in the stable stagnation point 1904 created by the field source 1903 in the reservoir 0702. FIG. 19A shows transport by positioning the stagnation point by translation of the field source along vector 1906 parallel to the membrane plane. FIG. 19B shows the transport by positioning the stagnation point by changing the ratio of the field strengths of the fields generated by the sources 1903.

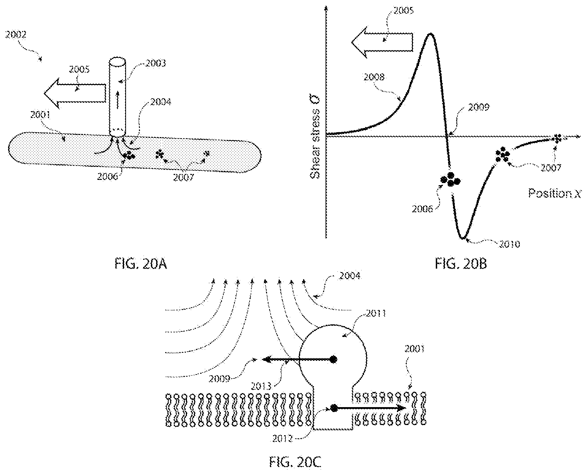

FIG. 20A depicts separation of membrane-attached objects 2006 and 2007 by scanning motion 2005 of field source 2003 parallel to membrane 2001 inside liquid volume 2002. The field 2004 is used to create a stagnation point 2009. If the stagnation point is translated by scanning motion with velocity v, the membrane-attached objects experience a force 2013 depending on their distance from the stagnation point. The force is balanced by the viscous drag 2012, which determines whether the membrane-attached objects are able to follow the scanning motion 2006, or stay behind 2007. FIG. 20B shows the force on the objects depending on the position relative to the stagnation point (2009). FIG. 20C shows the balance between the drag (2013) on the membrane-attached object (2011), which is produced by the field (2004) and the viscous drag produced by the membrane (2012).

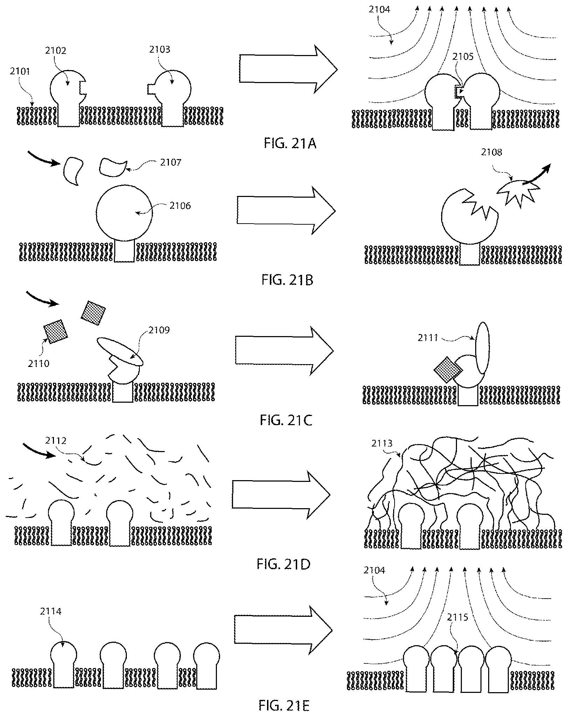

FIG. 21 shows exemplary uses of the invention. FIG. 21A depicts the process of bringing two membrane-attached objects 2102 and 2103 together in order to bind them to each other 2105. FIG. 21B depicts the full or partial removal 2108 of a membrane-attached object 2106 from the membrane by means of a chemical reaction initiated by delivery of a reagent 2107. FIG. 21C depicts the morphological change of a membrane-attached object 2109 initiated by delivery of a reagent 2110. FIG. 21D shows the formation of a gel 2113 from precursor 2112 for fixation of membrane-attached objects in the membrane. FIG. 21E shows an example of the arrangement of membrane proteins into an ordered two-dimensional assembly.

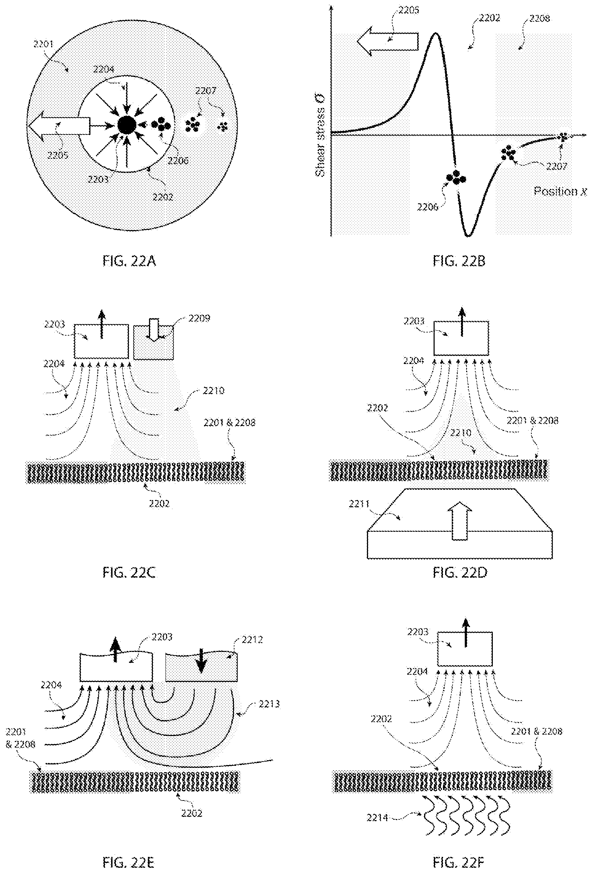

FIG. 22 depicts heat-assisted separation or fixation of membrane-attached objects, wherein the mobility of the objects is dependent on the temperature. FIGS. 22A and B show an exemplary setup where the heating zone 2202 is co-localized with stagnation point 2203. Mobility and diffusion of the objects 2207 outside of the heated-zone 2208 is reduced. FIG. 22C depicts the co-localization of an electromagnetic radiation guide 2209 with aspiration channel 2203, creating a heated zone 2210 around the stagnation point. In an exemplary embodiment, the guide is an optical fiber. FIG. 22D depicts an optical heating by means of focusing radiation with an objective 2211. FIG. 22E depicts heating by convection from a fluid stream with an elevated temperature 2213. FIG. 22F depicts heating by a substrate-embedded heater 2214. In one embodiment, the substrate-embedded heater can be a resistive heater.

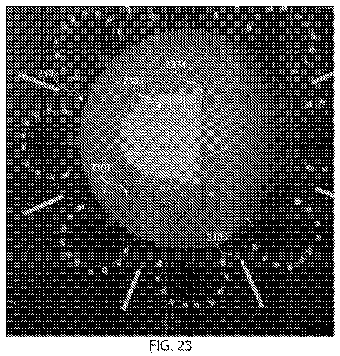

FIG. 23 shows exemplary use of the invention to deposit lipid monolayer films on patterned polymer surface. Element 2301 is the unexposed Teflon-AF coated deposition area. Element 2302 is the e-beam exposed Teflon-AF coated area. Element 2303 is the zone of the lipid membrane source delivery. Element 2304 is the flow-recirculating device tip. Element 2305 is the one of several alignment marks and numerals.

### DETAILED DESCRIPTION

This disclosure describes a method to fabricate, modify, remove and utilize a two-dimensional fluid membrane on a surface. FIG. 1 shows an embodiment of the method.

The invention comprises a surface 0101 covered by a liquid 0102, and two or more channels 0103, 0104, which are part of a "fluidic device" that is capable of producing a hydrodynamically confined flow 0105 near the surface 01010. The channels of the device can be translated relative to the surface 0101 along or or more axes 0106 such that the hydrodynamically-confined flow exposes desired areas of the surface 01010. Processing solutions, delivered though one or more of the channels to the surface, and confined hydrodynamically in a volume between the outlet of the device and the surface. One or more of the processing solutions contain a "membrane source", which when brought into contact with the surface forms a two-dimensional fluid membrane ("membrane") 0107. The membrane 0107 has two-dimensional fluidity, meaning that the building blocks of the membrane 0107 as well as the object attached to it can freely migrate within the membrane 0107.

Two or more processing solutions (0201, 0202) are supplied to the flow-recirculating device (FIG. 2). The device comprises a switching device 0203 as depicted in FIG. 2A that enables selection of an active processing solution, which is recirculated in the recirculation zone 0204. The switching device 0203 can comprise a pneumatic or electric valve or can be valveless. Valveless switching can include flow steering. The device can include a multicomponent recirculation zone 0205, where individual flows 0201 & 0202 are combined as co-flows (FIG. 2B). The flow rates in the device can be changed, which influences the size and geometry of the recirculation zone, as well as the confinement.

One embodiment of a flow-recirculating fluidic device is the multifunctional pipette described in International Publication Nos. WO 2011/067670 and WO 2012/153192 and Ainla, et al., Lab Chip 2012, DOI: 10.1039/C2LC20906C). This device allows valveless switching of up to 4 different processing solutions, which are provided from reservoirs inside the device. Other embodiments can comprise metal, glass or plastic capillaries, which are fabricated so that they can be brought sufficiently close to the solid surface and can be brought or are sufficiently close to each other.

External or internal reservoirs can be used for storage and delivery of processing solutions. In one embodiment, the channels are in the size range of 20 to 40 µm, positioned between 1-50 µm above the surface, and 5-50 µm separated from each other. The invention can comprise larger channels, wherein the channel separation scales with channel size. In one embodiment, the flow of processing solution through the recirculation zone can be driven by pressure and vacuum, or by electrical fields.

One or more processing solutions contain a membrane source, which in a preferred embodiment comprises small unilamellar vesicles. Other types of surfactant assemblies can also serve as membrane source. Nonlimiting examples of membrane sources are liposomes, phospholiposomes and niosomes. One or more membrane sources are simultaneously or sequentially recirculated by the flow-recirculating fluidic device, such that they are brought in contact with the surface. Upon contact, the membrane source adheres to the surface, and is there transformed into a membrane. H. Schonherr, J.M. Johnson, P. Lenz, C.W. Frank, S.G. Boxer, Vesicle adsorption and lipid bilayer formation on glass studied by atomic force microscopy, Langmuir 20 (2004) 11600-11606. Different types of membrane can be fabricated. In one embodiment, the fabricated membrane is a monolayer (0904) (FIG. 9C). In another embodiment, the fabricated membrane is a double layer (or bilayer) (0903) (FIG. 9B). In another embodiment, the fabricated membrane is a multilayer (0902) (FIG. 9A).

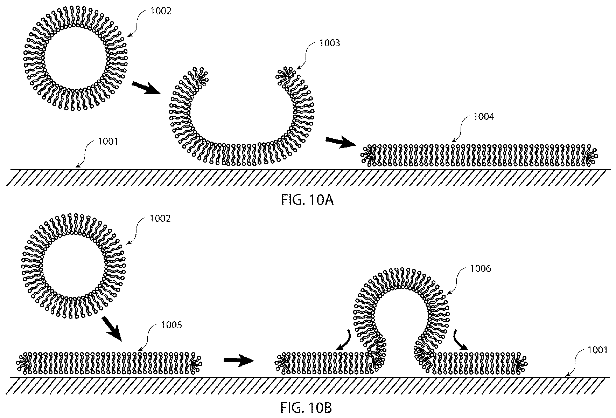

FIG. 10A-B shows examples of possible mechanisms of transformation of the membrane source into the membrane. Examplary embodiments are rupture (1003) of vesicles (1002), which form a membrane (1004) on the surface (1001) (FIG. 10A), and fusion of vesicles (1006) into an existing membrane (1005) on the surface (1001) (FIG. 10B). Nonlimiting examples of lipid sources are small unilamellar vesicles fabricated from are 1-Palmitoyl-2-oleoyl-*sn*-glycero-3-phosphocholine (POPC), Soy L-α-phosphatidylcholine (PC), and 1,2-dioleoyl-3-trimethyl-ammonium-propane (DOTAP), and vesicles containing membrane fractions obtained from biological cells or cell components. Examples of surfaces are soda-lime glass, borosilicate glass, quartz, and oxidized silicon (silicon dioxide). The transformation of the membrane source to a membrane can occur in different ways.

The time of exposure of the surface by the membrane source determins the coverage of the surface, and the fluidic properties of the formed membrane. Short exposure times prevent the formation of a coherent membrane that consistenly covers the entire exposed surface. If the surface is insufficiently covered by the membrane source, the membrane is not coherent over the exposed area, and transport within the membrane is not possible. In one embodiment, the time of exposure of the surface is chosen to allow sufficient coverage for two-dimensional transport. In another embodiment, the time of exposure is chosen to provide insufficient coverage for two-dimesional transport.

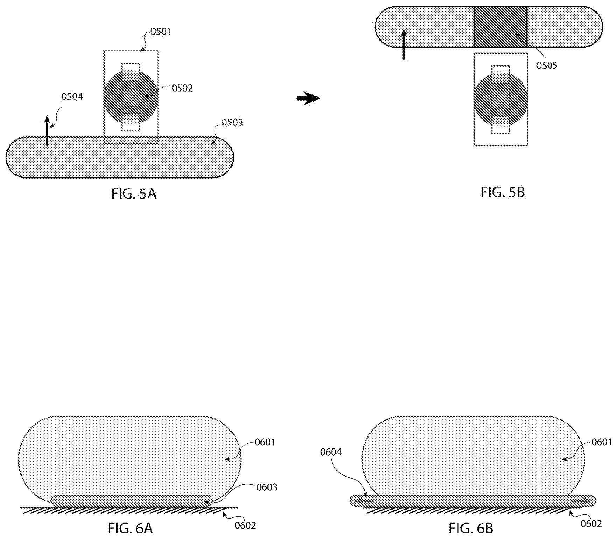

In one example, membrane source is deposited onto the surface such that the surface area exposed by the flow recirculation is fully covered. In this case deposition stops upon full coverage of the exposed surface area ("nonspreading deposition") (FIG. 6A, 10A). In a different example, membrane source is deposited onto the surface in the same way, but after complete coverage, membrane source continues to be deposited by fusing with the existing membrane, and the membrane area on the surface increases by continuous spreading ("spreading deposition") (FIG. 6B, 10B).

An example of nonspreading deposition is shown in FIG. 12A-C, using POPC vesicles as membrane source. Details are provided in the example section (Example 1). An example of spreading deposition is shown in FIG. 12D-F, using DOTAP vesicles as membrane source. Details are provided in the example section (Example 2). In one embodiment the membrane components are fully or partially exchanged while membrane material is supplied by the hydrodynamic flow confinement. If the membrane and the vesicles from the membrane source are in close contact, individual membrane components can be transferred from either the membrane to the source or vice versa. One example is the transfer of membrane proteins; another example is the enrichment of the membrane with cholesterol; still another example is the exchange of lipid molecules.

Different membrane sources are either simultaneously, or sequentially supplied. By this means a membrane of desired composition can be fabricated. One example of simultaneous application is on-device mixing prior to supplying the membrane sources to the flow recirculation, another example is mixing on the surface after individual membrane sources have been supplied to the recirculation zone. One example of sequential application is pulse-width-modulation-like flow switching inside the flow-recirculating fluidic device. Another example of sequential application is the insertion of membrane source into a membrane by means of "spreading deposition".

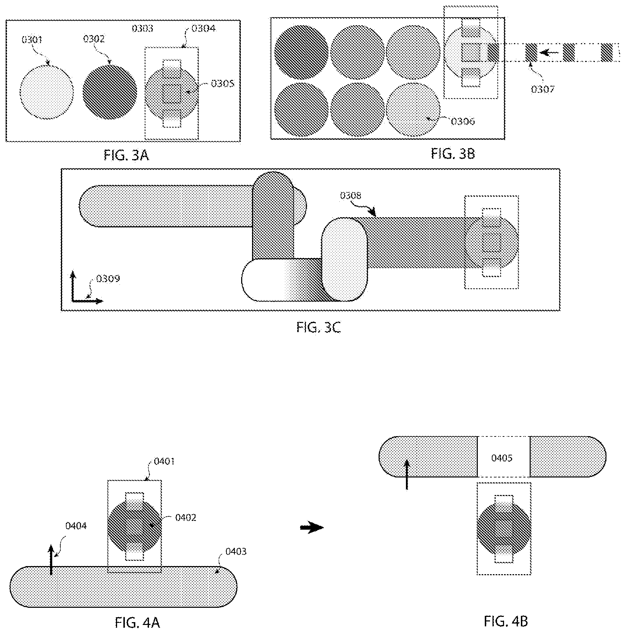

In one example, multiple individual membrane deposits of well-defined and individually different composition can be fabricated on selected regions on a surface, using a different membrane source on each selected region. Here, the composition of the membrane source is defined prior to deposition. FIG. 3A illustrates an exemplary embodiment in which two or more membrane sources are applied sequentially to fabricate a series of compositionally different membranes (0301, 0302), when brought into contact with the surface (0303). Each spot is fabricated (0305) from one individual membrane source, coming from the flow-recirculating fluidic device 0304. In another example, the composition of the membrane source is defined during deposition. Switching between different membrane sources, or multiplexing, is used to create such membrane spots of variable composition. In a preferred embodiment, pulse width modulation is used for multiplexing two or more different membrane sources in order to define the membrane composition. FIG. 3B illustrates multiplexing of different membrane sources which may be used to fabricate membrane regions of variable composition. Pulse width modulation (0307) is used for variable membrane composition in each individual spot (0306).

In the example section (Example 3), sequential deposition (multiplexing) of two differently fluorescently labeled POPC membrane sources is demonstrated. FIGS. 12G-H show fabrication of a series of membrane patches (1205) of systematically-changing composition, achieved by applying pulse width modulation flow switching between two processing solutions containing different membrane sources. FIG. 12G shows the fluorescence micrographs of the membrane component originating from source 1, and FIG. 12H shows the fluorescence micrographs of the membrane component originating from source 2. FIG. 12I shows the quantification of the fluorescence with respect to the PWM ratio of the two components (1206, 1207). FIG. 12J (Example 4) shows the fusion of a continuously applied second membrane source (1209) with an already fabricated membrane (1208) ("spreading deposition"). Both membrane and source were in this example supplied by a flow-recirculating microfluidic device. Both fluorescence channels are depicted. The original membrane patch grows due to incorporation of the membrane material from the second source (1210).

In one example, membranes can be deposited in different geometries. When the surface is translated relative to the flow-recirculating fluidic device, extended areas on the surface can be covered with the membrane. The shape and geometry of the membrane area deposited depends on the trajectory, speed, and sequence of the translations. In one example, the time of deposition is chosen such that the membrane is coherently covering the whole deposition area and has two-dimensional fluidity over the entire deposition area.

In one embodiment, the invention contemplates the use of a positioning device that allows translation of the device relative to the surface. Examples of positioning devices are micromanipulators and scanning stages. In a preferred embodiment, the positioning device features electronic control. The control unit may allow defining the speed and trajectory of the translation.

The control unit can also determine the flow rates in one or more channel(s). The composition of the membrane may be the same over the entire deposited membrane geometry. In another example, the composition of the membrane differs over the entire deposited membrane geometry, creating a spatially heterogeneous geometry with respect to membrane composition.

In one example, different deposited geometries are overlapping and are fluidically connected (0308). FIG. 3C illustrates an example in which coupling of multiplexing of membrane sources to translation (0309) of the surface relative to the channels is used to fabricate a spatially heterogeneous membrane geometry (0308). In another example, different geometries different deposited geometries are not overlapping, and are not fluidically connected (FIG. 3B). In the example section (Example 5), exemplary membrane geometries, fabricated by translation of the flow-recirculating microfluidic device relative to the surface during fabrication are described. FIG. 13A-C show fluorescence micrographs of some written geometries.

In one example, membranes of different composition are deposited in overlapping geometries in such a way, that the geometries are fluidically connected. Membrane components can cross over from one geometry to the other by means of diffusion. Example 6 demonstrates the fabrication and diffusional exchange between overlapping membrane geometries. FIG. 13D shows the fabrication of two partially overlaid membranes (1302 and 1303) immediately after fabrication, and after ~20 min. Each membrane is stained with a different fluorescent label. Both membranes mix by diffusion. Examples of uses for such diffusionally coupled membrane geometries are two-dimensional reaction systems, devices for membrane protein analysis, sensors and mimics of biological intercellular transport functions. The ability to generate compositional gradients in a deposited membrane geometry allows for the creation of driving forces for transport, and self-assembly, as well as concentration control of membrane components. A specific application area is the generation of functional self-assembled films on or within the deposited membrane, for example in the areas of photonics, catalysis or chemical transformations.

In one embodiment, a chemical reactant that dissolves or decomposes the deposited membrane is recirculated on a selected area on deposited membrane geometry, such that the deposited membrane is disassembled and removed from the surface in the exposed area. In another example, new membrane may be deposited onto the surface from which the membrane was removed, re-connecting the separated membrane geometries. In another example, new membrane is deposited onto the surface from which the membrane was removed, connecting either geometry with a different membrane geometry in the vicinity. This allows the separation, repair and reconfiguration of deposited membrane geometries, as well as the establishment of reconfigurable membrane networks. In another example, the membrane material that was removed from the surface is collected in an external or on-chip reservoir and used for membrane post-processing or chemical analysis. FIG. 4 illustrates an example in which one or more of the processing solutions (0402) can be used to remove (0405) the membrane locally (0403). FIG. 4A shows an exemplary membrane geometry before removal. FIG. 4A shows two new, disconnected membrane geometries after removal. Example 7 demonstrates localized membrane removal from prefabricated membrane lanes (1401), using a processing liquid containing a detergent (1402). The formed gap (1403) on the lower lane is repaired by fabricating membrane from another membrane source (1404). Diffusion across the repaired gap confirms fluidic connectivity (1405). FIG. 14 shows micrographs of this example.

In one example, a deposited membrane geometry is functionalized with a chemical or biological reagent.

In one example, the modification involves an additive reaction, where a reagent is coupled to the membrane. In one example, the modification involves a cleavage reaction, or dissociation. FIG. 21B depicts the full or partial removal 2108 of a membrane-attached object 2106 from the membrane by means of a chemical reaction initiated by delivery of a reagent 2107. In one example the reaction alters or breaks covalent or coordination bonds. In one example, the reaction involves non-covalent binding. In one example, the non-covalent binding is based on either nucleic acid hybridization, ligand-receptor affinity or antigen-antibody recognition. In one example, the two or more components of the membrane are reacting with each other or binding to each other.

Examples of chemical or biological reagents are proteins, peptides, sugars, lipids, DNA, enzymes, ions, ligands, and small organic molecules. In one example, global modification of a deposited membrane is performed by adding the reagent to the liquid. In another example, modification is performed using a conventional fluidic device such as a glass needle. In another embodiment, local modification is performed by means of the processing solutions of the flow-recirculating fluidic device. In one aspect, the processing solution may contain a chemical conjugation agent addressing a functional group available in the membrane.

In one aspect, the processing solution may contain a functional molecule coupled to a chemical conjugation agent addressing a functional group available in the membrane.

In another aspect, the processing solution may contain a functional molecule addressing a chemical conjugation group available in the membrane. In another aspect, the processing solution may contain a functional molecule addressing a complexing group available in the membrane. In another aspect, the processing solution may contain a functional molecule addressing a receptor available in the membrane. In another aspect, the processing solution may contain a functional molecule addressing a ligand available in the membrane. In one example, the processing solution may contain a membrane soluble dye. In one example, the processing solution contains an antibody. The processing solution can contain a detergent. In another aspect, the processing solution may cause morphological change of the membrane attached objects (FIG. 21C). FIG. 21C depicts the morphological change of a membrane-attached object 2109 initiated by delivery of a reagent 2110.

In one aspect, the processing solution may cause fixation or immobilization of the membrane or membrane components. In one aspect, the fixation may be caused by antibody binding. In one aspect, the fixation may be caused by receptor-ligand binding. In one aspect, the fixation may be caused by gel formation near the membrane (FIG. 21D). FIG. 21D shows the formation of a gel 2113 from precursor 2112 for fixation of membrane-attached objects in the membrane. In one aspect, the gel may be used to remove the membrane from the supporting substrate. In one example, the chemical treatment of membrane or membrane-attached objects may be used simultaneously or subsequently with concentration or separation.

FIG. 5 illustrates a hydrodynamically confined processing solution (0502) which modifies a membrane locally (0505). FIG. 5A shows an exemplary membrane geometry before local modification. FIG. 5B shows the same membrane geometry after local modification.

Membrane functionalization can be used in combination with the diverse functionalities of a microfluidic device. The flow-recirculating fluidic device is a microfluidic device. In another embodiment, the flow-recirculating fluidic device is connected to a microfluidic device. Examples of microfluidic functionalities are the delivery of single chemical or biochemical solutions to the membrane or membrane-attached object, the processing and subsequent delivery of multiple chemical or biochemical solutions to the membrane or membrane-attached object, where processing comprises mixing, dilution, switching and temperature regulation.

Further examples of microfluidic functionalities are the processing of aspirated fluid. The aspirated fluid can comprise membrane, membrane components, membrane-attached objects, and fragments or products of chemical reactions involving membrane or membrane-attached objects. Examples of aspirated fluid comprise DNA, proteins, peptides, lipids, sugars, ions, and ligands. Microfluidic processing functionalities for aspirated fluid can comprise sensing, partitioning, division into aliquots, concentration, dilution, chemical modification, digestion, fractionation, separation, and detection. In some embodiments, the aspirated fluid can be transferred to external processing devices.

Example 8 demonstrates sequential membrane functionalization. FIG. 15 shows fluorescence micrographs of the stepwise functionalization of a fabricated membrane (1501). A fluorescently-labeled primary antibody (1502) against a membrane constituent (biotin) is applied first, and a fluorescently-labeled secondary antibody (1503) against the first antibody is applied second, both from different processing solutions from the flow-recirculating microfluidic device. The top row shows a time series of the fluorescence of a membrane-attached fluorescent dye, the middle row a time series of the fluorescence of the primary antibody, and the bottom row a time series of the fluorescence of the secondary antibody.

In one embodiment, the membranes are deposited on a patterned surface. The feature size of a pattern can be between 10 nm and the size scale of the entire surface. Patterns can be regions that are physically or chemically different from the remainder of the surface.

Chemical patterns can have a different surface chemistry or different material than the remainder of the surface. Physical patterns can have differences in surface morphology, such as roughness. Examples of chemical patterns are protein coatings, photoresist or polymer coatings, hydrogel coatings, self-assembled monolayers, or deposited thin films. Examples of physical patterns are regular or irregular arrays of particles or pillars, surface roughness resulting from polishing, etching, or sputtering. Examples of methods to produce patterns on surfaces are localized treatment with chemicals, lithography, plasma treatment, coating, physical and chemical deposition, wet and dry etching, chemical and physical etching.

In another aspect, the patterns may be defined by the geometry of the features. Examples of geometric patterns are patches, lanes, and interconnected combinations of patches and lanes of variable sizescales from 10 nm to the size scale of the surface. Examples of methods to define geometries are lithography, engraving, embossing, direct writing techniques, and physical masks.

Patterns of different type and size scale can coexist on the same surface. FIG. 7 illustrates an exemplary embodiment in which a surface (0701) is covered with a geometric pattern (0702) (FIG. 7A). FIG. 7A shows an exemplary patterned surface with different properties in different patterns, wherein the surface has either the same properties over the entire pattern (0703) or has contiously variable properties (0704). Examples of functions of the pattern with respect to the membrane source are either differential adhesion properties of membrane material (FIG. 7C) or differential transport or partitioning properties (FIG. 7D) of the membrane material or of individual membrane components or of membrane-associated materials and objects. In one embodiment (FIG. 7C), the membrane can be deposited from the membrane source (0705) selectively (0706) onto the pattern (0702). In one exemplary embodiment (FIG. 7E), the membrane can selectively propagate (0710) on the pattern.

Example 10 demonstrates controlled lipid flow in patterned 2D channels. In FIG. 17, fluorescence micrographs of directed migration (1704) of a spreading membrane, which is labeled with a fluorescent dye (1701), and deposited inside specific patterns (1702) on a patterned surface (1703) are shown.

In one embodiment, a membrane can be exposed to a field or a gradient. The field or gradient acts on membrane or its components causing migration of membrane or membrane components or causing modification of the membrane. Examples of fields are hydrodynamic flow field, electrical field, magnetic fields, and electromagnetic fields. Examples of gradients are surface tension gradient, thermal gradient, solution composition gradient, and surface chemical gradient. The field or gradient can be applied during or after membrane deposition, or both. The source of the field (0808) or gradient can be part of the fluidic device, or can be part of the surface (FIG. 8E), or above (Fig 8F) or below the surface, and can be located in an external device (0809), e.g., the hydrodynamically confined fluidic device. Sources of the fields or gradients, could be aspiration or injection flow channels, electrodes, permanent and electromagnets, optical fibers, focused light sources, boundaries of hydrodynamically confined flow, surface patterns, local chemical reactions, mechanical straining of substrate or membrane. FIG. 8 illustrates an exemplary embodiment in which an field or gradient (0803) is applied along some parts of the membrane (0802) on the surface (0801) (FIG. 8A). The field or gradient causes membrane propagation (0804) (FIG. 8B), propagation of membrane-attached molecules or particles (0805) (FIG. 8C), spatial separation of molecules or particles (0806, 0807) (FIG. 8D). The field or gradient can be homogenous or non-homogenous (0810) (FIG. 8G).

In one example, the field or gradient changes polarity or direction. In a further example, the lateral component of the field or gradient changes polarity or direction. The point of polarity or direction change (0812) can be a stable stagnation point for membrane components or membrane attached components (0811), which are migrating in the field or gradient (FIG. 8H). The stagnation point can be moved across the surface (0813) (FIG. 8I), and used for separation, or concentration of membrane components or membrane attached components.

In one embodiment, a field is applied that features a stagnation point in one or both of its lateral components. The stagnation point, in which the field changes polarity, is located in the area that is covered by the membrane. In one embodiment, the membrane components interact with the field, causing a stable stagnation point for these membrane components. In one embodiment, the stable stagnation point is used to concentrate or accumulate membrane components. In this embodiment, a static field source is translated across the membrane, translating the stable stagnation point. Membrane components or membrane-attached objects migrate in the plane of the membrane together with the stagnation point.

FIG. 19 shows two exemplary modes of transport of a membrane-attached object 1905 by moving the stagnation point. The object is trapped in the stable stagnation point 1904 created by the field source 1903 in the reservoir 0702. FIG. 19A shows transport by positioning the stagnation point by translation of the field source along vector 1906 parallel to the membrane plane. FIG. 19B shows the transport by positioning the stagnation point by changing the ratio of the field strengths of the fields generated by the sources 1903.

FIG. 20A depicts separation of membrane-attached objects 2006 and 2007 by scanning motion 2005 of field source 2003 parallel to membrane 2001 inside liquid volume 2002. The field 2004 is used to create a stagnation point 2009. If the stagnation point is translated by scanning motion with velocity v, the membrane-attached objects experience a force 2013 depending on their distance from the stagnation point. The force is balanced by the viscous drag 2012, which determines whether the membrane-attached objects are able to follow the scanning motion 2006, or stay behind 2007. FIG. 20B shows the force on the objects depending on the position relative to the stagnation point (2009). FIG. 20C shows the balance between the drag (2013) on the membrane-attached object (2011), which is produced by the field (2004) and the viscous drag produced by the membrane (2012).

The invention can be utilized to confine, trap, accumulate, position, move, transport, separate and extract objects which are attached to or embedded in a membrane. In one aspect, the invention comprises a method to control the local concentration of membrane attached objects. This control of the concentration means accumulation of the membrane attached objects in the vicinity of the stagnation point.

To produce a stagnation point, a field is generated by a field source near the membrane. If projected to the membrane plane, then the field lines 2004 are converging towards a point (stagnation/sink point) near the field source 2003. The field exerts a force, which is moving the objects towards the stagnation point. Since the objects are membrane-attached, they cannot follow the field towards the field source, and become stably trapped in the stagnation point. While trapped, the objects are governed by two opposing processes, 2D diffusion in the membrane, which would broaden their spatial distribution in the membrane, and field confinement, which is pulling them towards the stagnation point, and keeping them in it. This balance can be adjusted by changing the field strength, or force, around the stagnation point. By changing the field strength, or by moving the field source perpendicularly towards and away from the membrane, the force on the objects is adjusted. The adjustment allows control of the balance, and determines the concentration distribution of the membrane-attached objects around the stagnation point. The maximum achievable concentration has a limit, due to the crowding effects, which are more significant in 2D space than in 3D.

By deliberately moving the stagnation point 2005, the membrane-attached objects follow it, and are thus transported between desired areas, or regions, on the membrane. If the objects are located outside of the stagnation point, they experience a restoring force pulling them towards it. The magnitude of the force depends on the spatial offset of the object from the stagnation point. At small offsets, the force will increase with offset distance, which provides a negative feedback. However, the force has a maximum 2010, after which it will drop rapidly 2008 with distance from the stagnation point 2009.

The force (2013) further depends on the field strength (2004) and size and shape of the membrane-attached object (2011). On the other hand, the transported object experiences viscous drag (2012), which is generated by the membrane and depends on the anchoring. The size, shape and anchoring contribute to a "mobility factor" (*µ*), which determines the relation (*u* = *µ*Φ) between transport velocity (*v*) of the object and the field or gradient strength (Φ) around it. These are material properties of the membrane and the membrane-attached object.

Positioning of the stagnation point can be achieved by scanning the field source or changing the field strength in two or more field sources (FIG. 7). If the stagnation point (2009) is scanned (2005), the objects will experience a positional offset from the stagnation point (FIG. 20B). The larger the offset, the larger is the restoring force pulling the objects toward the stagnation point (negative feedback). However, this relation has maxima 2010 (*σₘₐₓ*), beyond which the restoring force will rapidly decrease (2008). If the scanning rate v is chosen such that the force required to move the objects at this rate is less than the maximum (*u* < *µ*Φ*ₘₐₓ*), the object will follow the stagnation point (2006). If the scanning rate is higher, the object will stay behind (2007). Since the restoring force will decrease rapidly after the maxima, it provides additional positive feedback for *µ*-based separation, with the limit *µₗᵢₘᵢₜ* = *u*/Φ*ₘₐₓ*.

In some examples, the scanning rate or the force are varied during the separation to sequentially separate objects with different mobility factors µ from each other (2006, 2007).

In some aspects, the invention comprises an additional means for local delivery of materials into the vicinity of the stagnation point. In some aspects, the material can be membrane material for formation of membrane (FIG. 21B). In another aspect, the material can alter the shape or size of the object and, therefore, would also alter the mobility factor (µ) (FIGS. 21C-D). The shape or size of the object can be altered by digestion (FIG. 21C) or conformation changes (Fig 21D) or by formation of molecular assemblies in the membrane.

In one aspect, the method may be used in combination with a means for fixation of the membrane (FIG. 21E), which is beneficial to maintain positions of concentrated or separated objects. In some aspect the fixation is done by the local formation of a gel (2113). In some aspects, the gel 2113 can be used to remove membrane from the substrate for subsequent processing and analysis.

Example 9 demonstrates hydrodynamic vesicle trapping. FIG. 16 shows micrographs of a hydrodynamic trapping experiment. A spreading membrane (1601) is fabricated first, and a non-spreading membrane (1602) second (FIG. 16A). Outflow from the center channel of the flow-recirculating microfluidic device (1603) is reversed (FIG. 16B), leading to accumulation of membrane material (1604) from the non-spreading material in the stagnation point of the flow field. Example 11 demonstrates hydrodynamic particle trapping. FIG. 18 shows a time series of three fluorescence micrographs of trapping and concentration control of fluorescent nanoparticles 1801 at different trapping conditions defined by the inflow rate of the flow-recirculating microfluidic device. Immobile particles (1802) are unaffected by the flow. An exemplary use of fields in the invention is depicted in FIG. 21A, where two membrane-attached objects 2102 and 2103 are brought together in order to bind them to each other 2105.

In one aspect, the control of the concentration may be used to concentrate membrane-bound biomolecules, such as nuclear-receptors, or G-protein coupled receptors. In a related aspect, the invention may be used to concentrate membrane proteins in a membrane area so that they assume an ordered structure or crystallize. FIG. 21E shows an example of the arrangement of membrane proteins into an ordered two-dimensional assembly.

The invention can be applied where positioning of a membrane-bound objects close to a sensor or probe is desired. Examples of such sensors or probes are chemical or optical sensors, or electrodes. In one aspect, trapping may be used to exert a force onto a membrane-bound object, to measure forces acting on membrane-bound objects, to measure interactions between membrane-bound objects, or to measure interactions between membrane-bound objects and non-membrane-bound objects. An example may be the monitoring of allosteric interactions between membrane proteins (FIG. 21A). In another aspect, trapping may be used to study mechanical properties of the membranes or membrane-bound objects. Exemplary aspects may be the measurement of DNA stretching, membrane rupturing, or adhesion strength.

The invention can be used in combination with detection methods and devices. Such detectors can be utilized to analyze chemical or physical modifications or structural changes of the membrane, or material released from the membrane. In one embodiment, the system is coupled with an analytical detection mechanism. In one example, the detection mechanism may be electrical. In one example, the detection may be optical. In one example, the detection mechanism may be electrochemical. In one example, the detection mechanism may be mechanical. In one example, the optical detection mechanism may be microscopy-based. The invention can be applied in environments including an optical microscope. Optical microscopes can be both upright and inverted light microscopes. Examples of optical microscopes include fluorescence, epi-fluorescence, confocal, or TIRF microscopes.

In one aspect, the invention may include temperature control in the vicinity of the membrane. In one aspect, the temperature control may be global, wherein the temperature of the entire membrane is changed. In another aspect, the temperature control may be locally applied to a selected membrane region. In one example, temperature control may be used to change the fluidity of the deposited membrane. In one aspect, the combination of temperature control and the phase transition of surfactants in the membrane may be used for on/off-switching of transport and diffusion of membrane-attached objects. An example may use thermotropic lipids as membrane source.

In one aspect, temperature control may be used to change the composition of the membrane. In one aspect, the composition change of the membrane may comprise phase transition and phase separation. In another aspect, the composition change of the membrane may comprise lipid raft formation. In one example, temperature control may be used to modify the chemical reactivity of membrane components. In one example, temperature control may be used to modify the chemical reactivity of processing solutions. In one example, temperature control may be used to cause morphological changes of the membrane, or disintegrate the membrane.

In one example, temperature control may be achieved by means of heating. Examples of heat sources are resistive heaters, Peltier elements, radiative heaters, continuous wave or pulsed laser heaters, and convective heaters. In one example, the temperature control may be achieved with a resistive heater under the membrane (FIG. 22F), such that heat conduction 2214 through the substrate changes the temperature of the membrane 2202.

In one example, the temperature control may be used to establish a temperature gradient over the membrane or over a local area of the membrane. In one example, the thermal gradient may be used to transport membrane material by means of thermomigration or thermo diffusion. In one example, temperature control may be used in the vicinity of a stagnation point created by a field (FIG. 22). FIG. 22A depicts an example in which region of higher temperature (2202) may be created in the vicinity of the stagnation point (2203), while a lower temperature region (2201) is maintained further away from it. The mobility factor is influenced by the temperature (FIG. 22B). This can be due to variable viscosity of the membrane, phase transition of the membrane, a transformation of the object or change in the interaction between the membrane and the object. In another aspect, the stagnation point and the point of local heating may be positioned in the same location (FIG. 22A-B). Local heating can be co-localized with the stagnation point. In one example, radiation can be guided through an optical waveguide to affect the membrane locally (2209) (FIG. 22C).

In some examples, the waveguide can be attached to the field source. In some examples, the waveguide may be an optical fiber. In some other examples, the waveguide may be microfabricated into the flow-recirculating fluidic device (2203/2209). In another example, the radiation can be provided through a microscope objective 2211 (FIG. 22D). In another example, the temperature control may be achieved with fluid circulation (FIG. 22E). An injection channel 2212 close to the aspiration channel 2203 may be used to inject a fluid of higher temperature 2213 into the flow field around the aspiration channel 2204, such that it reaches the membrane 2202.

### EXAMPLES

Non-limiting examples of the invention are presented herein.

### EXPERIMENTAL SETUP

### Microfluidic Device

Aspiration control was achieved my means of a microfluidic device described in Ainla, et al. A multifunctional pipette, Lab Chip 2012 coupled to a pressure controller. The microfluidic device has the following properties and dimensions. Channel size: 30 µm × 30 µm, channel-channel separation at the tip: 20 µm, channel-bottom separation at the tip: 20 µm, solution reservoirs: 35 uL, flow conductance of supply channels: 53 nL/(s^{∗}bar), outflow: 3.2 nL/s, inflow (from 2 channels): 10.6 nL/s, ratio (outflow/inflow): 0.3. The device has the capability to switch in a valveless fashion between four different solutions.

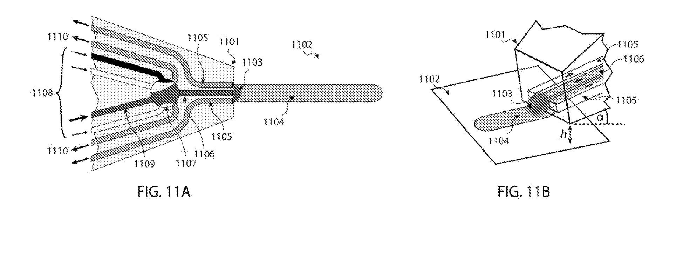

FIG. 11 is schematic view of this device (1101) and the utilization for the fabrication of a membrane (1104) on a surface (1102). The device comprises inflow (1106) and outflow (1105) channels, which generate a flow recirculation volume (1103). The inflow is selected through a valveless switching chamber (1107), comprising a number of supply (1108) and vacuum (1110) channels. Fig. 11A is a schematic top down view, FIG. 11B a perspective view.

### Micropositioning

Micropositioning was implemented using manual water hydraulic micromanipulators (Narishige MH-5, Japan) or electronic computer controllable micromanipulators (Scientifica PatchStar, UK). The micromanipulators allow positioning of the pipette and bringing the tip into proximity of the desired objects of interest inside the reservoir.

The experimental setup comprised the multifunctional pipette, a laser scanning confocal microscope Leica IRE2 (Leica Microsystems GmbH, Wetzlar, Germany) equipped with Leica TCS SP2 confocal scanner with AOBS^{™} and Ar/ArKr and HeNe lasers to provide excitation wavelength 488, 594 and 633 nm. Objectives used were HC PL APO CS 20x 0.70 UV and HCX PL APO CS 40x 1.25 OIL UV. The sample position was controlled by a scanning stage SCAN IM 120x100 (Märzhäuser Wetzlar GmbH & Co. KG, Wetzlar, Germany), equipped with a CORVUS^{™} stage controller (Märzhäuser). Both scanning stage and pipette control unit were connected to a PC computer via USB port. Custom software, written in Microsoft Visual C++ (.NET), allowed simultaneous control of stage position and pipette control unit, through which the liquid composition and deposition spot size were controlled. The pipette was held and positioned in the beginning of an experiment by a 3-axis water hydraulic micromanipulator Narishige MH-5 (Japan). During the experiment, the pipette tip was positioned about -10-20 µm above the surface, so that materials could be delivered to the surface, while avoiding direct contact, which would damage the lipid film.

### EXPERIMENTS

### Surfaces

### Glass surfaces

Circular microscope cover glasses #1.5 (Menzel-Gläser, 47mm diameter) were obtained from Thermo Scientific (Sweden). Before use, the glass surfaces were cleaned in the MC2 process laboratory at Chalmers University of Technology. First, the slides were immersed in freshly prepared piranha solution (3:1 v/v mixture of concentrated H₂SO₄ and 30% H₂O₂, heated to 100-110 °C) for 10 min, followed by rinsing with deionixed water and blow drying with nitrogen. Thereafter, the glass slices were mounted to a WILLCO WELLS^{™} dish frame using a dedicated double sided tape and assembly kit (Willco Wells B. V., Amsterdam, Netherlands) and stored in a sealed plastic bag until use.

### SU-8 surfaces

The cleaned cover glasses were coated with ~2 µm high SU-8 patterns using the procedure provided by Microchem Corporation. SU-8 2002 (Microchem Corp, Massachusetts, USA) was spin-coated at 3000 rpm for 30 s, followed by soft baking for 2 min at 95 °C on a hot-plate. The SU-8 film was exposed with a dose of 120 mJ/cm² on a Karl-Süss^{™} contact mask aligner MA6 (G-line, 5-6 mW/cm²), using the "Low-Vac" mode with a bright-field chromium mask. The substrates were then post-exposure-baked for 2 min at 95 °C on a hot-plate. Thereafter, the SU-8 was developed in SU-8 Developer (Microchem) for 1 min using two sequential bathes, rinsed by spraying with clean developer, and blow dried with nitrogen, yielding a SU-8 coated cover glass where the channels are formed by the exposed glass. The surfaces were plasma cleaned briefly in a Plasma Therm BatchTop RIE (50 W, 250 mTorr, 1 min) plasma chamber, and hard baked for 10 min at 200 °C on a hot plate with slow heating and cooling to prevent crack formation. The so-prepared glass slides were mounted to dish frames like the plain glass slides described in the previous section.

### Lipid Source Preparation

The following vesicle compositions were used:
- POPC-488: POPC 99%, ATTO88-DOPE 1%;
- POPC-655: POPC 99%, ATTO655-DOPE 1%;
- POPC-B: POPC 99%, Biotin-PE 1%;
- POPC-488B: POPC 98%, ATTO488-DOPE 1%, Biotin-PE 1%;
- POPC-655B: POPC 98%, ATTO655-DOPE 1%, Biotin-PE 1%; and
- DOTAP-655: PC 49%, DOTAP 50%, ATTO655-DOPE 1%.

1-Palmitoyl-2-oleoyl-*sn*-glycero-3-phosphocholine (POPC), Soy L-α-phosphatidylcholine (PC), 1,2-dioleoyl-3-trimethyl-ammonium-propane (DOTAP), 1,2-dioleoyl-*sn*-glycero-3-phosphoethanolamine-N-(cap biotinyl) (Biotin-PE) were obtained from Avanti Polar Lipids (USA). ATTO 488 1,2-dioleoyl-*sn*-glycero-3-phosphoethanolamine (ATTO 488-DOPE) and ATTO 655 1,2-dioleoyl-*sn*-glycero-3-phosphoethanolamine (ATTO 655-DOPE) were provided by ATTO-TEC GmbH (Germany).

### Stock Vesicle Suspensions

For each recipe, a designated amount (see above) of lipids and lipid conjugates in chloroform were mixed and diluted with chloroform to a total concentration of 10 mg/ml. 300 µl of this solution was placed in a 10 ml round bottom flask, and the chloroform was removed in a rotary evaporator at reduced pressure (-80 kPa) over a period of 6 hours. The dry lipid film at the walls of the flask was rehydrated with 3 ml of PBS buffer containing 5mM Trisma Base (Sigma Aldrich), 30 mM K₃PO₄ (Sigma Aldrich), 30 mM KH₂PO₄ (Sigma Aldrich), 3 mM MgSO₄^{∗}7H₂O (Merck), and 0.5 mM Na₂EDTA (Sigma Aldrich). The pH was adjusted to 7.4 with H₃PO₄ (Sigma Aldrich). The rehydrated lipid cake was placed in the fridge (4° C) overnight. In the final step, the lipid cake was sonicated at 120W/35kHz (Bandelin Sonorex, Germany) at room temperature for 15-30 s, to induce the formation of giant vesicles of varying, mainly multiple lamellarity.

### Small Unilamellar Vesicles

Small unilamellar vesicles were prepared on the day the experiments were conducted. 100 µl of the desired vesicle stock solutions were diluted (1:10) with TRIS buffer [125 mM NaCl (Sigma Aldrich), 10 mM TRIS (VWR), 1 mM Na₂EDTA (Sigma Aldrich), adjusted to pH=7.4 and sonicated using a Sonics & Materials Vibra Cell^{™} High Intensity Ultrasonic Liquid Processor (Model 501, CIAB, Chemical Instruments AB, Sweden) at 15 °C for 10 minutes. The sonicated samples were subsequently ultra-centrifuged at 40,000 rpm at 15 °C for 30 minutes to separate multilamellar aggregates and tip debris (Beckman TL-100 Ultracentrifuge, USA). The small unilamellar vesicles in the supernatant were transferred to a separate tube.

### Triton X

Triton X detergent was obtained from Sigma Aldrich and diluted 1:10 with TRIS buffer.

### Antibodies

Antibodies were obtained from Agrisera (Sweden). 0.2 mg of goat anti-biotin antibody conjugated to DyLight 650 ("Goat anti-biotin") was dissolved in 1 ml of 10 mM TRIS buffer. 0.2 mg of donkey anti-Goat IgG antibody conjugated to DyLight 594 ("Anti-goat") was dissolved in 1 ml of 10 mM TRIS buffer. All antibody solutions were prepared instantly prior to the experiments, at room temperature.

### Biotin Solution

1 mg powder of ATTO 488-biotin (Sigma Aldrich, MO, USA) was diluted with 5 ml of HEPES buffer (10 mM HEPES, 100 mM NaCl, pH=7.4 adjusted with NaOH) to a final concentration of 0.2 mg biotin /ml HEPES.

### Particle Solution

8 µl of NEUTRAVIDIN^{®}-coated latex particles (NEUTRAVIDIN^{®} Labeled Microspheres, 0.2 µm, Yellow-Green Fluorescent (505/515), 1% solids, Invitrogen (Life Technologies); CA, USA) was diluted with 392 µl of HEPES buffer (10 mM HEPES, 100 mM NaCl, pH=7.4). The diluted solution is sonicated for 15 minutes (sonication frequency: 35 kHz, sonication power: 30/120 W, Bandelin Sonorex, Germany) and filtered through a PVDF (Hydrophilic polyvinylidene fluoride) membrane (Acrodisc LC syringe filter with effective filtration area of 13 mm with 0.2 µm pore size, PALL Life Sciences; NY, USA).

### Example 1 - Deposition of a POPC spot (FIG. 12 A-C)

The flow-recirculating microfluidic device was loaded with POPC-488 as membrane source. The device was positioned and the flow of lipid vesicle suspension (POPC-488) was switched-on for 160 s (FIG. 12 A). A uniformly fluid lipid membrane was formed with a time constant of ~20 s. The covered area remained nearly constant (FIG. 12 B). FIG. 12C shows the exponential surface coverage kinetics with a time constant of about 20 s. The inset demonstrates spot uniformity. When the surface becomes covered, it eventually forms a uniform film. Density and size evolution of the spot were analysed.

### Example 2 - Deposition of a DOTAP Spot (FIGS. 12D-F)

The flow-recirculating microfluidic device was loaded with DOTAP-655 as membrane source. The device was positioned and the flow of lipid vesicle suspension (DOTAP-655) was switched-on for 600 s (FIGS. 12D-E). A uniformly fluid lipid membrane was formed immediately. The covered area grows continuously with a linear increase in spot radius. (FIG. 12F). Density and size evolution of the spot were analyzed.

### Example 3 - Multiplexing of Different Membrane Sources (FIGS. 12G-I)

Switching between different membrane sources was used to create membranes with a variable composition. The flow-recirculating microfluidic device was loaded with two different membrane sources (POPC-488, POPC-655) . The pipette was positioned and the flow of lipid vesicle suspension was started. Pulse width modulation was used to multiplex the flow according to the desired composition. The composition was changed over time in steps of 10%. FIGS. 12G-H show the fluorescence emission channels of each membrane component. FIG. 12I (normalized emission intensity vs. PWM ratio) quantifies this development.

### Example 4 - Membrane Fusion (FIG. 12J)

The flow-recirculating microfluidic device was loaded with two types of lipid vesicles (POPC-488 and DOTAP-655). Thereafter, the pipette was positioned and the flow of POPC-488 vesicle suspension was switched on for 60 s to deposit a POPC spot. Thereafter, the flow was switched off and the pressure conditions were set such that the outflow rate would be about half the previous rate, to ensure that the size of the hydrodynamically confined flow (HCF) volume is reduced and the DOTAP is deposited within the boundaries of the already existing POPC film. Thereafter, DOTAP-655 deposition was switched on. The DOTAP membrane source fused into the previously formed membrane, resulting in an increase in the patch size due to spreading.

### Example 5 - Surface Writing (FIG. 13)

The flow-recirculating microfluidic device was loaded with POPC-655 as a membrane source. The device was positioned and the flow of membrane source (POPC-655) was switched-on. Three writen membrane geometries (heart, stickman, and smile, as shown in FIGS. 13A-C, respectively) were fabricated by computer controlled translation of the the surface. Step size of the motion was 13 - 18 µ*m* and membrane was deposited in each step for 7 s. Since the spot diameter was about 100 µm, the line area was deposited in about 30 s.

### Example 6 - Multicomponent Surface writing

Multicomponent surface writing of two partially overlapping membrane patches is depicted in FIGS. 13D-E. The flow-recirculating microfluidic device was loaded with two different membrane sources (POPC-488, POPC-655). The device was positioned and the flow of lipid vesicle suspension was started. Two 300 µm long and 100 µm wide lanes were written with a step size of 25 µm and a deposition time of 10s. First, POPC-488 was written, followed by POPC-655. The lanes were offset by 50 µm and were overlapping partially (Fig. 13 D). After writing, the diffusion was monitored for 15 min and the fluorescence intensity vs. a linear coordinate through the written areas (arrow) was analyzed (FIG. 13E).

### Example 7 - Membrane Removal (FIG. 14)

The flow-recirculating microfluidic device was loaded with three solutions: two types of membrane source (POPC-488 and POPC-655) and a solution of dilute Triton-X. Two parallel lanes of 150 µm length were written (FIG. 14A), using POPC-655. Thereafter Triton-X solution was switched on (using increased supply pressure to compensate higher viscosity). The HCF volume is easily visible in the transmission channel of the microscope, due to a higher refractive index (FIG. 14B). Triton-X was scanned perpendicularly over the lower lane (Fig. 14C). Thereafter, the outflow was switched off again, the supply pressure was set to its initial value, and the pipette was positioned onto the cutting point of the lane. A spot of POPC-488 was deposited in order to reconnect the lane (FIG. 14 D-E).

### Example 8 - Sequential Membrane Functionalization (FIG. 15)

The flow-recirculating microfluidic device was loaded with four solutions: two types of membrane source (POPC-488B and POPC-B) and two antibody (primary goat anti biotin and secondary anti goat) solutions. The device was positioned and a 200 µm lane was written with a step size of 10 µm and a deposition time of 5s, such that first 100 µm were composed of POPC-488B, followed by 100 µm of POPC-B (FIG. 15 A). Thereafter, the device was moved 100 µm backwards onto the middle point of the lane, and goat anti-biotin was applied for 5 s, followed by 10 min diffusion time (FIG. 15B). Thereafter anti-goat was applied for 5 s onto the same spot (FIG. 15C), after which re-distribution of molecular species was monitored for about 15 min (FIG. 15D).

### Example 9 - Hydrodynamic Vesicle Trapping

The flow-recirculating microfluidic device was loaded with two different membrane sources (POPC-488, DOTAP-655). This experiment was started by depositing POPC membrane source onto a DOTAP membrane (FIG. 16 A). After the POPC membrane source was deposited onto the DOTAP film, the supply pressures were adjusted for maximal inflow (*Q* ≈ 33 *nl*/*s*) through the middle channel (FIG. 16B). Trap formation and collection of vesicles under the middle channel were monitored (FIG. 16C-D).

### Example 10 - Controlled Flow in Patterned 2D Channel

Flow-recirculating microfluidic device was loaded with two different membrane sources (POPC-488, DOTAP-655) and positioned onto the SU-8 patterned area (FIG. 17A). First, the surface of the patterned channel was covered with POPC-488, thereafter DOTAP-655 was deposited onto the circular supply area, and transport of fluorescently labelled lipid from the supply area into the channel was monitored for about 25 min (FIG. 17B-C).

### Example 11 - Hydrodynamic Particle Trapping

The surface was approached with the flow-recirculating microfluidic device. NEUTRAVIDIN^{®}-coated particles were injected through the outflow channel of the device, followed by a resting time of~10 seconds. Subsequently, biotin solution was injected through the same channel after internal switching between the two solutions into the vicinity of the lipid membrane patch. This biotin blocking of the remaining free binding sites of avidin prevents the encapsulation of the latex particles by the biotinylated lipid membrane. After adjustment of the flow parameters of the pipette, accumulation of particles in a confined area around the stagnation point is observed on the lipid patch. The particles migrate on the surface of the membrane, following the movement of the stagnation point created by the pipette. FIG. 18 shows a series of fluorescence micrographs of this trapping and concentration control experiment.

### Example 12 - Deposition of a Lipid Monolayer (FIG. 23)

Conductive indium tin oxide (ITO) coated cover glass slides were coated with 80nm of DUPONT^{®} TEFLON^{®} AF amorphous fluoropolymer by spin-coating the coated surfaces and were e-beam patterned, using a JEOL JBX9300 e-beam lithography system, an acceleration voltage of 100 kV, and an exposure dose of 1000µC/cm2. The exposed pattern defined the edge of the area on which a lipid monolayer is able to spread. The patterned cover glass-slides were submerged to aqueous TRIS buffer under a confocal microscope (as described in the previous example). The flow-recirculating microfluidic device was loaded with DOTAP-655 as membrane source. The device was positioned on the top of deposition area encompassed by the exposed spreading barrier. The flow of lipid vesicle suspension was switched on for 20 min (Fig. 23). A continuous fluid lipid monolayer was formed, covering the entire available unexposed deposition area.

## Claims

1. A method for fabrication of a membrane on a surface, the method comprising:
providing a flow-recirculating microfluidic device having at least one inlet port and channel exits in proximity of the surface (0303, 0701, 0801, 0813, 1001, 1102, 1703); and
locally delivering one or more processing solutions (0201, 0202, 0402) including one or more membrane sources (0705, 1209, 1404) adapted and configured to form a membrane (0107,0802, 1004, 1104, 1208, 1501, 1601, 1602, 2012) on the surface (0303, 0701, 0801, 0813, 1001, 1102, 1703), said one or more membrane sources forming a monolayer (0904), a bilayer (0903) or a multilayer (0902) two-dimensional fluid membrane (0107) on said surface;
**characterized in that** the processing solutions (0201, 0202, 0402) are surfactant-comprising processing liquids, and **in that** the method further comprises:
providing a volume of an aqueous solution acting as a confining liquid said volume having an outer surface (0303, 0701, 0801, 0813, 1001, 1102, 1703) interfacing two environments, wherein one of the environments is the confining liquid;
introducing the flow-recirculating microfluidic device into said volume of confining liquid such that one or more outlet ports of the microfluidic device are positioned below said outer surface;
dispensing said one or more processing solutions (0201, 0202, 0402) from the flow-recirculating microfluidic device into the confining liquid such that the one or more processing solutions (0201, 0202, 0402) are hydrodynamically confined between the confining liquid and the surface (0303, 0701, 0801, 0813, 1001, 1102, 1703), thereby fabricating said membrane (0107, 0802, 1004, 1104, 1208, 1501, 1601, 1602, 2012); and
translating a relative position of the channel exits of said flow-recirculating microfluidic device relative to the surface (0303, 0701, 0801, 0813, 1001, 1102, 1703) to create a two-dimensional fluid membrane (0107) having a geometry defined by a translation path.

2. The method of claim 1, wherein the channel exits are positioned at a distance of about 10 µm to about 100 µm from the surface (0303, 0701, 0801, 0813, 1001, 1102, 1703).

3. The method of claim 1, further comprising:
controlling a positioning device to facilitate translation of the channel exits relative to the surface (0303, 0701, 0801, 0813, 1001, 1102, 1703).

4. The method of claim 1, further comprising:
switching between two or more processing solutions (0201, 0202, 0402).

5. The method of claim 1, wherein one or more of the processing solutions (0201, 0202, 0402) is a detergent adapted and configured to remove a portion of a previously-deposited membrane (0107, 0802, 1004, 1104, 1208, 1501, 1601, 1602, 2012) or its components from the surface (0303, 0701, 0801, 0813, 1001, 1102, 1703).

6. The method of claim 1, wherein multiple membrane sources (0705, 1209, 1404) are used to create the membrane (0107, 0802, 1004, 1104, 1208, 1501, 1601, 1602, 2012) with variable composition.

7. The method of claim 1, further comprising:
modifying the membrane (0107, 0802, 1004, 1104, 1208, 1501, 1601, 1602, 2012) locally.

8. The method of claim 1, wherein the surface (0303, 0701, 0801, 0813, 1001, 1102, 1703) contains a pattern (0702, 0703), and wherein the pattern (0702, 0703) has different chemical or physical properties than non-patterned regions of the surface (0303, 0701, 0801, 0813, 1001, 1102, 1703).

9. The method of claim 8, wherein the membrane (0107, 0802, 1004, 1104, 1208, 1501, 1601, 1602, 2012) propagates exclusively on the pattern (0702, 0703).

10. The method of claim 1, further comprising:
applying a field or gradient (0808, 2004) along a part of the membrane (0107, 0802, 1004, 1104, 1208, 1501, 1601, 1602,2012).

11. The method of claim 10, wherein the field or gradient (0808, 2004) causes one or more of the membrane components to migrate in the membrane (0107, 0802, 1004, 1104, 15 1208, 1501, 1601, 1602, 2012).

12. The method of claim 11, wherein:
the field or gradient (0808, 2004) changes direction along the membrane (0107, 0802, 1004, 1104, 1208, 1501, 1601, 1602, 2012);
the direction of the field changes at a stable stagnation point for membrane-attached components (0811) ; and
the stable stagnation point accumulates or traps membrane-attached components (0811).

13. The method of claim 1, further comprising:
heating the membrane (0107, 0802, 1004, 1104, 1208, 1501, 1601, 1602, 2012).

14. The method of claim 1, wherein the membrane (0107, 0802, 1004, 1104, 1208, 1501, 1601, 1602, 2012) comprises one or more additional components selected from the group consisting of: proteins, nanoparticles, microspheres, virus particles, vesicles, cell, bacterial cells, surfactant molecules, lipid molecules, and non-lipid molecules.

## Patentansprüche

1. Verfahren zur Herstellung einer Membran auf einer Oberfläche, wobei das Verfahren Folgendes umfasst:
Bereitstellen einer Strömungs-Rezirkulations-Mikrofluidvorrichtung, die mindestens eine Einlassöffnung und Kanalausgänge in der Nähe der Oberfläche (0303, 0701, 0801, 0813, 1001, 1102, 1703) aufweist; und
lokales Zuführen einer oder mehrerer Verarbeitungslösungen (0201, 0202, 0402) welche eine oder mehrere Membranquellen (0705, 1209, 1404) enthalten, die dazu angepasst und ausgebildet sind, eine Membran (0107, 0802, 1004, 1104, 1208, 1501, 1601, 1602, 2012) auf der Oberfläche (0303, 0701, 0801, 0813, 1001, 1102, 1703) zu bilden, wobei die eine oder die mehreren Membranquellen eine einschichtige (0904), zweischichtige (0903) oder mehrschichtige (0902) zweidimensionale Fluidmembran (0107) auf dieser Oberfläche bilden;
**dadurch gekennzeichnet, dass** die Verarbeitungslösungen (0201, 0202, 0402) tensidhaltige Verarbeitungsflüssigkeiten sind, und dass das Verfahren ferner umfasst:
Bereitstellung eines Volumens einer wässrigen Lösung, die als Begrenzungsflüssigkeit wirkt,
wobei dieses Volumen eine Außenfläche (0303, 0701, 0801, 0813, 1001, 1102, 1703), die zwei Umgebungen miteinander verbindet, aufweist, wobei eine der Umgebungen die Begrenzungsflüssigkeit ist;
Einführen der Strömungs-Rezirkulations-Mikrofluidvorrichtung in das Volumen der Begrenzungsflüssigkeit, so dass eine oder mehrere Auslassöffnungen der Mikrofluidvorrichtung unterhalb der äußeren Oberfläche positioniert sind;
Abgeben der einen oder mehreren Verarbeitungslösungen (0201, 0202, 0402) aus der Strömungs-Rezirkulations-Mikrofluidikvorrichtung in die Begrenzungsflüssigkeit, so dass die eine oder mehreren Verarbeitungslösungen (0201, 0202, 0402) hydrodynamisch zwischen der Begrenzungsflüssigkeit und der Oberfläche (0303, 0701, 0801, 0813, 1001, 1102, 1703) eingeschlossen sind,
wodurch die Membran (0107, 0802, 1004, 1104, 1208, 1505, 1601, 1602, 2012) hergestellt wird; und
Verschieben einer relativen Position der Kanalausgänge der Strömungs-Rezirkulations-Mikrofluidvorrichtung relativ zur Oberfläche (0303, 0701, 0801, 0813, 1001, 1102, 1703), um eine zweidimensionale Fluidmembran (0107) mit einer durch einen Translationsweg definierten Geometrie zu erzeugen.

2. Verfahren nach Anspruch 1, wobei die Kanalausgänge in einem Abstand von etwa 10 µm bis etwa 100 µm von der Oberfläche (0303, 0701, 0801, 0813, 1001, 1102, 1703) angeordnet sind.

3. Verfahren nach Anspruch 1, ferner umfassend:
Steuern bzw. Regeln einer Positioniervorrichtung, um die Verschiebung der Kanalausgänge relativ zur Oberfläche (0303, 0701, 0801, 0813, 1001, 1102, 1703) zu erleichtern.

4. Verfahren nach Anspruch 1, ferner umfassend:
Umschalten zwischen zwei oder mehr Verarbeitungslösungen (0201, 0202, 0402).

5. Verfahren nach Anspruch 1, wobei es sich bei einer oder mehreren der Verarbeitungslösungen (0201, 0202, 0402) um ein Reinigungsmittel handelt, welches dazu angepasst und ausgebildet ist, einen Teil einer zuvor abgeschiedenen Membran (0107, 0802, 1004, 1104, 1208, 1501, 1601, 1602, 2012) oder ihrer Komponenten von der Oberfläche (0303, 0701, 0801, 0813, 1001, 1102, 1703) zu entfernen.

6. Verfahren nach Anspruch 1, wobei mehrere Membranquellen (0705, 1209, 1404) verwendet werden, um die Membran (0107, 0802, 1004, 1104, 1208, 1501, 1601, 1602, 2012) mit variabler Zusammensetzung herzustellen.

7. Verfahren nach Anspruch 1, ferner umfassend:
lokales Modifizieren der Membran (0107, 0802, 1004, 1104, 1208, 1501, 1601, 1602, 2012).

8. Verfahren nach Anspruch 1, wobei die Oberfläche (0303, 0701, 0801, 0813, 1001, 1102, 1703) ein Muster (0702, 0703) enthält, und wobei das Muster (0702, 0703) andere chemische oder physikalische Eigenschaften aufweist als nicht gemusterte Bereiche der Oberfläche (0303, 0701, 0801, 0813, 1001, 1102, 1703).

9. Verfahren nach Anspruch 8, wobei sich die Membran (0107, 0802, 1004, 1104, 1208, 1501, 1601, 1602, 2012) ausschließlich auf dem Muster (0702, 0703) ausbreitet.

10. Verfahren nach Anspruch 1, ferner umfassend:
Anlegen eines Feldes oder Gradienten (0808, 2004) entlang eines Teils der Membran (0107, 0802, 1004, 1104, 1208, 1501, 1601, 1602, 2012).

11. Verfahren nach Anspruch 10, wobei das Feld oder der Gradient (0808, 2004) eine oder mehrere der Membrankomponenten veranlasst, in der Membran (0107, 0802, 1004, 1104, 15 1208, 1501, 1601, 1602, 2012) zu wandern.

12. Verfahren nach Anspruch 11, wobei:
das Feld oder der Gradient (0808, 2004) seine Richtung entlang der Membran (0107, 0802, 1004, 1104, 1208, 1501, 1601, 1602, 2012) ändert;
die Richtung des Feldes sich an einem stabilen Stagnationspunkt für an der Membran befestigte Komponenten (0811) ändert; und
der stabile Stagnationspunkt membrangebundene Komponenten (0811) akkumuliert oder einfängt.

13. Verfahren nach Anspruch 1, ferner umfassend:
Erhitzen der Membran (0107, 0802, 1004, 1104, 1208, 1501, 1601, 1602, 2012).

14. Verfahren nach Anspruch 1, wobei die Membran (0107, 0802, 1004, 1104, 1208, 1501, 1601, 1602, 2012) eine oder mehrere zusätzliche Komponenten umfasst, die ausgewählt sind aus der Gruppe bestehend aus: Proteinen, Nanopartikeln, Mikrokügelchen, Viruspartikeln, Vesikeln, Zellen, bakteriellen Zellen, oberflächenaktiven Molekülen, Lipidmolekülen und Nicht-Lipidmolekülen.

## Revendications

1. Procédé pour la fabrication d'une membrane sur une surface, le procédé comprenant :
l'obtention d'un dispositif microfluidique à recirculation de flux ayant au moins un orifice d'entrée et des sorties de canal à proximité de la surface (0303, 0701, 0801, 0813, 1001, 1102, 1703) ; et
la délivrance locale d'une ou plusieurs solutions de traitement (0201, 0202, 0402) contenant une ou plusieurs sources de membrane (0705, 1209, 1404) adaptées et configurées pour former une membrane (0107, 0802, 1004, 1104, 1208, 1501, 1601, 1602, 2012) sur la surface (0303, 0701, 0801, 0813, 1001, 1102, 1703), lesdites une ou plusieurs sources de membrane formant une membrane de fluide à deux dimensions (0107) monocouche (0904), bicouche (0903) ou multicouche (0902) sur ladite surface ;
**caractérisé en ce que** les solutions de traitement (0201, 0202, 0402) sont des liquides de traitement comprenant un tensioactif, et **en ce que** le procédé comprend en outre :
l'obtention d'un volume d'une solution aqueuse agissant comme un liquide de confinement, ledit volume ayant une surface extérieure (0303, 0701, 0801, 0813, 1001, 1102, 1703) interfaçant deux environnements, parmi lesquels l'un des environnements est le liquide de confinement ;
l'introduction du dispositif microfluidique à recirculation de flux dans ledit volume de liquide de confinement de façon qu'un ou plusieurs orifices de sortie du dispositif microfluidique soient positionnés sous ladite surface extérieure ;
la délivrance desdites une ou plusieurs solutions de traitement (0201, 0202, 0402) depuis le dispositif microfluidique à recirculation de flux dans le liquide de confinement de façon que la ou les solutions de traitement (0201, 0202, 0402) soient hydrodynamiquement confinées entre le liquide de confinement et la surface (0303, 0701, 0801, 0813, 1001, 1102, 1703), en fabriquant ainsi ladite membrane (0107, 0802, 1004, 1104, 1208, 1501, 1601, 1602, 2012) ; et
la translation d'une position relative des sorties de canal dudit dispositif microfluidique à recirculation de flux par rapport à la surface (0303, 0701, 0801, 0813, 1001, 1102, 1703) pour créer une membrane de fluide à deux dimensions (0107) ayant une géométrie définie par un trajet de translation.

2. Procédé selon la revendication 1, dans lequel les sorties de canal sont positionnées à une distance d'environ 10 µm à environ 100 µm par rapport à la surface (0303, 0701, 0801, 0813, 1001, 1102, 1703).

3. Procédé selon la revendication 1, comprenant en outre :
le contrôle d'un dispositif de positionnement pour faciliter la translation des sorties de canal par rapport à la surface (0303, 0701, 0801, 0813, 1001, 1102, 1703).

4. Procédé selon la revendication 1, comprenant en outre :
la commutation entre deux ou plus de deux solutions de traitement (0201, 0202, 0402).

5. Procédé selon la revendication 1, dans lequel une ou plusieurs des solutions de traitement (0201, 0202, 0402) est un détergent adapté et configuré pour retirer une portion d'une membrane préalablement déposée (0107, 0802, 1004, 1104, 1208, 1501, 1601, 1602, 2012) ou ses composants depuis la surface (0303, 0701, 0801, 0813, 1001, 1102, 1703).

6. Procédé selon la revendication 1, dans lequel de multiples sources de membrane (0705, 1209, 1404) sont utilisées pour créer la membrane (0107, 0802, 1004, 1104, 1208, 1501, 1601, 1602, 2012) avec une composition variable.

7. Procédé selon la revendication 1, comprenant en outre :
la modification de la membrane (0107, 0802, 1004, 1104, 1208, 1501, 1601, 1602, 2012) localement.

8. Procédé selon la revendication 1, dans lequel la surface (0303, 0701, 0801, 0813, 1001, 1102, 1703) contient un motif (0702, 0703), et dans lequel le motif (0702, 0703) a des propriétés chimiques ou physiques différentes de celles de régions sans motif de la surface (0303, 0701, 0801, 0813, 1001, 1102, 1703).

9. Procédé selon la revendication 8, dans lequel la membrane (0107, 0802, 1004, 1104, 1208, 1501, 1601, 1602, 2012) se propage exclusivement sur le motif (0702, 0703).

10. Procédé selon la revendication 1, comprenant en outre :
l'application d'un champ ou gradient (0808, 2004) le long d'une partie de la membrane (0107, 0802, 1004, 1104, 1208, 1501, 1601, 1602, 2012).

11. Procédé selon la revendication 10, dans lequel le champ ou gradient (0808, 2004) provoque la migration d'un ou plusieurs des composants de membrane dans la membrane (0107, 0802, 1004, 1104, 1208, 1501, 1601, 1602, 2012).

12. Procédé selon la revendication 11, dans lequel :
le champ ou gradient (0808, 2004) change de direction le long de la membrane (0107, 0802, 1004, 1104, 1208, 1501, 1601, 1602, 2012) ;
la direction du champ change au niveau d'un point de stagnation stable pour des composants attachés à la membrane (0811) ; et
le point de stagnation stable accumule ou piège des composants attachés à la membrane (0811).

13. Procédé selon la revendication 1, comprenant en outre :
le chauffage de la membrane (0107, 0802, 1004, 1104, 1208, 1501, 1601, 1602, 2012).

14. Procédé selon la revendication 1, dans lequel la membrane (0107, 0802, 1004, 1104, 1208, 1501, 1601, 1602, 2012) comprend un ou plusieurs composants additionnels choisis dans le groupe constitué par : les protéines, les nanoparticules, les microsphères, les particules virales, les vésicules, les cellules, les cellules bactériennes, les molécules de tensioactif, les molécules lipidiques, et les molécules non lipidiques.
